# EUROPEAN PATENT APPLICATION

(11) **EP 3 819 974 A1**
(43) Date of publication of application: **12.05.2021**
(21) Application number: 20205834.3
(22) Date of filing: 05.11.2020
(51) Int. Cl.: H01M 10/0562, C01G 25/00, C01G 30/00, C01G 33/00, C01G 35/00, H01M 10/0525

(54) **SOLID COMPOSITION AND METHOD FOR PRODUCING SOLID ELECTROLYTE**

(30) Priority: 05.11.2019 JP 2019201086
(71) Applicant: Seiko Epson Corporation, Tokyo 160-8801 (JP)
(72) Inventor: YOKOYAMA, Tomofumi, Suwa-shi, Nagano 392-8502 (JP); TOYODA, Naoyuki, Suwa-shi, Nagano 392-8502 (JP); YAMAMOTO, Hitoshi, Suwa-shi, Nagano 392-8502 (JP)
(74) Representative: Miller Sturt Kenyon

(57) **Abstract**

A solid composition according to the present disclosure is a solid composition for use in forming a solid electrolyte having a crystal phase, containing: at normal temperature and normal pressure, an oxide having a crystal phase different from the crystal phase of the solid electrolyte; a lithium compound; and an oxo acid compound. The oxo acid compound may contain at least one of a nitrate ion and a sulfate ion as an oxo anion.

## Description

The present application is based on, and claims priority from JP Application Serial Number 2019-201086, filed November 5, 2019, the disclosure of which is hereby incorporated by reference herein in its entirety.

### BACKGROUND

### 1. Technical Field

The present disclosure relates to a solid composition and a method for producing a solid electrolyte.

### 2. Related Art

As a secondary battery using a solid electrolyte, for example, an all-solid lithium secondary battery including a positive electrode, a negative electrode, and a solid electrolyte containing a ceramic having a garnet-type or garnet-like crystal structure formed of lithium, lanthanum, zirconium, and oxygen is known (see, for example, JP-A-2010-45019).

JP-A-2010-45019 discloses a method for producing a solid electrolyte material, which has a garnet-type or garnet-like type crystal structure formed of Li, La, Zr, and O, by subjecting a raw material containing an Li component, an La component and a Zr component to a heat treatment at a temperature higher than 1,125°C and lower than 1,230°C for 30 hours or longer and 50 hours or shorter. JP-A-2010-45019 also discloses that Li₂CO₃ is used as the Li component, La(OH)₃ or La₂O₃ is used as the La component, and ZrO₂ is used as the Zr component. In addition, in JP-A-2010-45019, a chemical composition of the solid electrolyte obtained as above has a stoichiometric amount of Li equal to or less than that of Li₇La₃Zr₂O₁₂, which is a garnet-type ceramic, and is given as Li₇₋ₓLa₃Zr₂O₁₂ (0 ≤ x ≤ 1.0).

However, when the above high-temperature and long time heat treatment is performed, it is difficult to obtain the composition as designed since the Li volatilizes. As a result, it is difficult to achieve desired characteristics, particularly a desired lithium ionic conductivity in the obtained solid electrolyte.

### SUMMARY

The present disclosure has been made to solve the above problems, and can be implemented as the following application examples.

A solid composition according to an application example according to the present disclosure is a solid composition for use in forming a solid electrolyte having a crystal phase, containing: at normal temperature and normal pressure, an oxide having a crystal phase different from the crystal phase of the solid electrolyte; a lithium compound; and an oxo acid compound.

In the solid composition according to another application example of the present disclosure, the oxo acid compound contains at least one of a nitrate ion and a sulfate ion as an oxo anion.

In the solid composition according to another application example of the present disclosure, the solid composition contains Li, La, Zr, and M, and a ratio of substance amounts of Li, La, Zr, and M contained in the solid composition is 7-x:3:2-x:x, and 0 < x < 2.0, where M is at least one element selected from the group consisting of Nb, Ta, and Sb.

In the solid composition according to another application example of the present disclosure, a crystal phase of the oxide is a pyrochlore type crystal, and a crystal phase of the solid electrolyte is a cubic garnet type crystal.

A method for producing a solid electrolyte according to an application example of the present disclosure includes: heating the solid composition according to the present disclosure at a temperature of 700°C or higher and 1,000°C or lower.

### BRIEF DESCRIPTION OF THE DRAWINGS

FIG. 1 is a schematic perspective view schematically showing a configuration of a lithium ion battery as a secondary battery according to a first embodiment.
FIG. 2 is a schematic perspective view schematically showing a configuration of a lithium ion battery as a secondary battery according to a second embodiment.
FIG. 3 is a schematic cross-sectional view schematically showing a structure of the lithium ion battery as the secondary battery according to the second embodiment.
FIG. 4 is a schematic perspective view schematically showing a configuration of a lithium ion battery as a secondary battery according to a third embodiment.
FIG. 5 is a schematic cross-sectional view schematically showing a structure of the lithium ion battery as the secondary battery according to the third embodiment.
FIG. 6 is a schematic perspective view schematically showing a configuration of a lithium ion battery as a secondary battery according to a fourth embodiment.
FIG. 7 is a schematic cross-sectional view schematically showing a structure of the lithium ion battery as the secondary battery according to the fourth embodiment.
FIG. 8 is a flowchart showing a method for producing the lithium ion battery as the secondary battery according to the first embodiment.
FIG. 9 is a schematic view schematically showing the method for producing the lithium ion battery as the secondary battery according to the first embodiment.
FIG. 10 is a schematic view schematically showing the method for producing the lithium ion battery as the secondary battery according to the first embodiment.
FIG. 11 is a schematic cross-sectional view showing another method for forming a solid electrolyte layer.
FIG. 12 is a flowchart showing a method for producing the lithium ion battery as the secondary battery according to the second embodiment.
FIG. 13 is a schematic view schematically showing the method for producing the lithium ion battery as the secondary battery according to the second embodiment.
FIG. 14 is a schematic view schematically showing the method for producing the lithium ion battery as the secondary battery according to the second embodiment.
FIG. 15 is a flowchart showing a method for producing the lithium ion battery as the secondary battery according to the third embodiment.
FIG. 16 is a schematic view schematically showing the method for producing the lithium ion battery as the secondary battery according to the third embodiment.
FIG. 17 is a schematic view schematically showing the method for producing the lithium ion battery as the secondary battery according to the third embodiment.
FIG. 18 is a flowchart showing a method for producing the lithium ion battery as the secondary battery according to the fourth embodiment.
FIG. 19 is a schematic view schematically showing the method for producing the lithium ion battery as the secondary battery according to the fourth embodiment.
FIG. 20 is a graph showing an X-ray diffraction pattern of solid compositions according to Examples 1 to 4.
FIG. 21 is a graph showing an X-ray diffraction pattern of solid compositions according to Examples 5 to 8.
FIG. 22 is a graph showing an X-ray diffraction pattern of solid compositions according to Examples 9 to 12.
FIG. 23 is a graph showing an X-ray diffraction pattern of solid compositions according to Comparative Examples 1 to 3.
FIG. 24 is a graph showing an X-ray diffraction pattern of solid electrolytes according to Examples 1 to 4.
FIG. 25 is a graph showing an X-ray diffraction pattern of solid electrolytes according to Examples 5 to 8.
FIG. 26 is a graph showing an X-ray diffraction pattern of solid electrolytes according to Examples 9 to 12.
FIG. 27 is a graph showing an X-ray diffraction pattern of solid electrolytes according to Comparative Examples 1 to 3.

### DESCRIPTION OF EXEMPLARY EMBODIMENTS

Hereinafter, preferred embodiments of the present disclosure will be described in detail.

### 1. Solid Composition

First, a solid composition according to the present disclosure will be described.

The solid composition according to the present disclosure is used to form a solid electrolyte having a crystal phase. The solid composition contains, at normal temperature and normal pressure, an oxide having a crystal phase different from the crystal phase of the solid electrolyte, a lithium compound, and an oxo acid compound.

Accordingly, it is possible to provide a solid composition which can stably form a solid electrolyte having desired characteristics by a heat treatment at a relatively low temperature for a relatively short time. More specifically, when the oxo acid compound is contained in the solid composition, a melting point of the oxide is lowered, and an adhesion interface with an adherend can be formed while promoting crystal growth of the oxide in a calcination treatment which is a heat treatment at a relatively low temperature for a relatively short time. Further, due to an action of causing a reaction of incorporating lithium ions into the oxide contained in the solid composition during the reaction, a solid electrolyte that is a lithium-containing composite oxide can be formed at a low temperature. Therefore, for example, it is possible to achieve effects of preventing a decrease in ionic conductivity due to volatilization of the lithium ions which is a problem in the related art, and producing an all-solid battery having excellent battery capacity under a high load.

On the other hand, when the conditions described above are not satisfied, a satisfying result is not obtained.

For example, when the solid composition does not contain the oxo acid compound, the effect of reducing the melting point of the oxide is not obtained, calcination does not proceed sufficiently in the heat treatment at a relatively low temperature for a relatively short time, and it is difficult to obtain a solid electrolyte having a target crystal phase.

When the solid composition does not contain the oxide, the solid electrolyte which is a lithium-containing composite oxide cannot be formed.

When the solid composition does not contain the lithium compound, the solid electrolyte which is the lithium-containing composite oxide cannot be formed.

In the present disclosure, the normal temperature refers to 25°C and the normal pressure refers to 1 atm.

As described above, the solid composition according to the present disclosure contains, at the normal temperature and the normal pressure, the oxide having a crystal phase different from the crystal phase of the solid electrolyte, the lithium compound, and the oxo acid compound. On the other hand, as described below, the oxo acid compound may be a compound containing a lithium ion together with an oxo anion. In such a case, it can be said that the compound is the lithium compound as well as the oxo acid compound. Therefore, for example, even when the solid composition is formed only of the oxide having a crystal phase different from the crystal phase of the solid electrolyte, and a compound containing a lithium ion together with an oxo anion at the normal temperature and the normal pressure, it is considered that "the solid composition contains, at the normal temperature and the normal pressure, the oxide having a crystal phase different from the crystal phase of the solid electrolyte, the lithium compound, and the oxo acid compound".

### 1.1 Oxide

In the solid composition according to the present disclosure, the solid electrolyte formed using the solid composition contains oxides having different crystal phases. Hereinafter, the oxide is also referred to as a "precursor oxide". In the present disclosure, "different" for the crystal phase is a broad concept including that types of crystal phases are not the same, and that at least one lattice constant is different even when the types are the same.

The precursor oxide may be one having a crystal phase different from the crystal phase of the solid electrolyte formed using the solid composition according to the present disclosure. For example, when the crystal phase of the solid electrolyte formed using the solid composition according to the present disclosure is a cubic garnet type crystal, the crystal phase of the precursor oxide is preferably a pyrochlore type crystal.

Accordingly, even when the heat treatment for the solid composition is performed at a lower temperature for a shorter time, a solid electrolyte having a particularly excellent ionic conductivity can be suitably obtained.

In addition to the pyrochlore type crystal described above, examples of the crystal phase of the precursor oxide may include a cubic crystal having a perovskite structure, a rock salt structure, a diamond structure, a fluorite structure, or a spinel structure, a ramsdellite type orthorhombic crystal, and a corundum type trigonal crystal.

The composition of the precursor oxide is not particularly limited, and the precursor oxide is preferably a composite oxide containing La, Zr, and M. M is at least one element selected from the group consisting of Nb, Ta, and Sb.

Accordingly, even when the heat treatment for the solid composition is performed at a lower temperature for a shorter time, a solid electrolyte having a particularly excellent ionic conductivity can be suitably obtained. For example, in an all-solid secondary battery, adhesion to a positive electrode active material or a negative electrode active material of a formed solid electrolyte can be further improved, materials can be combined to have a better adhesion interface, and characteristics and reliability of the all-solid secondary battery can be further improved.

M is at least one element selected from the group consisting of Nb, Ta, and Sb, and preferably contains two or more elements selected from the group consisting of Nb, Ta, and Sb.

Accordingly, the effects described above are more remarkably exhibited.

When the precursor oxide is a composite oxide containing La, Zr, and M, it is preferable that a ratio of substance amounts of La, Zr, and M contained in the precursor oxide is 3:2-x:x, and 0 < x < 2.0.

Accordingly, the effects described above are more remarkably exhibited.

A crystal particle diameter of the precursor oxide is not particularly limited, and is preferably 10 nm or more and 200 nm or less, more preferably 15 nm or more and 180 nm or less, and even more preferably 20 nm or more and 160 nm or less.

Accordingly, a melting temperature of the precursor oxide and a calcination temperature of the solid composition can be further lowered by a so-called Gibbs-Thomson effect which is a melting point lowering phenomenon accompanied by an increase in surface energy. This is also advantageous in improving adhesion between the solid electrolyte formed using the solid composition according to the present disclosure and a different material, and in reducing defect density.

The precursor oxide preferably has a substantially single crystal phase.

Accordingly, since the number of crystal phase transition that occurs when the solid electrolyte is produced using the solid composition according to the present disclosure, that is, when a high temperature crystal phase is generated, is substantially one, generation of impurity crystals due to element segregation or element thermal decomposition accompanying with the crystal phase transition is prevented, and various properties of the produced solid electrolyte are further improved.

In a case in which only one exothermic peak in a range of 300°C or higher and 1,000°C or lower is observed when the solid composition according to the present disclosure is measured by TG-DTA at a temperature rising rate of 10°C/min, it can be determined that the solid composition is formed of a "substantially single crystal phase".

A content of the precursor oxide in the solid composition according to the present disclosure is not particularly limited, and is preferably 35 mass% or more and 75 mass% or less, more preferably 45 mass% or more and 65 mass% or less, and even more preferably 55 mass% or more and 60 mass% or less.

Accordingly, even when the heat treatment for the solid composition is performed at a lower temperature for a shorter time, a solid electrolyte having a particularly excellent ionic conductivity can be suitably obtained.

The solid composition according to the present disclosure may contain a plurality of types of precursor oxides. When the solid composition according to the present disclosure contains a plurality of types of precursor oxides, a sum of contents of the precursor oxide in the solid composition according to the present disclosure is used as a content value.

### 1.2 Lithium Compound

The solid composition according to the present disclosure contains a lithium compound.

Accordingly, the solid electrolyte formed using the solid composition can be formed of a lithium-containing composite oxide, and characteristics such as an ionic conductivity can be improved.

Examples of the lithium compound contained in the solid composition include inorganic salts such as LiH, LiF, LiCI, LiBr, Lil, LiCIO, LiClO₄, LiNO₃, LiNO₂, Li₃N, LiN₃, LiNH₂, Li₂SO₄, Li₂S, LiOH, and Li₂CO₃, carboxylates such as lithium formate, lithium acetate, lithium propionate, lithium 2-ethylhexanoate, and lithium stearate, hydroxy acid salts such as lithium lactate, lithium malate, and lithium citrate, dicarboxylate salts such as lithium oxalate, lithium malonate, and lithium maleate, alkoxides such as methoxylithium, ethoxylithium, and isopropoxylithium, alkylated lithium such as methyllithium and n-butyllithium, sulfate esters such as n-butyl lithium sulfate, n-hexyl lithium sulfate, and lithium dodecyl sulfate, diketone complexes such as 2,4-pentanedionatolithium, and derivatives thereof such as hydrates and halogen substitutes. One type or a combination of two or more types selected from the examples of the lithium compound may be used.

Among these, the lithium compound is preferably one or two types selected from the group consisting of Li₂CO₃ and LiNO₃.

Accordingly, the effects described above are more remarkably exhibited.

A content of the lithium compound in the solid composition according to the present disclosure is not particularly limited, and is preferably 10 mass% or more and 20 mass% or less, more preferably 12 mass% or more and 18 mass% or less, and even more preferably 15 mass% or more and 17 mass% or less.

Accordingly, even when the heat treatment for the solid composition is performed at a lower temperature for a shorter time, a solid electrolyte having a particularly excellent ionic conductivity can be suitably obtained.

When the content of the precursor oxide in the solid composition according to the present disclosure is defined as XP (mass%) and the content of the lithium compound in the solid composition according to the present disclosure is defined as XL (mass%), it is preferable to satisfy a relationship of 0.13 ≤ XL/XP ≤ 0.58, more preferable to satisfy a relationship of 0.18 ≤ XL/XP ≤ 0.4, and even more preferable to satisfy a relationship of 0.25 ≤ XL/XP ≤ 0.3.

Accordingly, even when the heat treatment for the solid composition is performed at a lower temperature for a shorter time, a solid electrolyte having a particularly excellent ionic conductivity can be suitably obtained.

The solid composition according to the present disclosure may contain a plurality of types of lithium compounds. When the solid composition according to the present disclosure contains a plurality of types of lithium compounds, a sum of contents of the lithium compounds in the solid composition according to the present disclosure is used as a content value.

### 1.3 Oxo Acid Compound

The solid composition according to the present disclosure contains an oxo acid compound that contains no metal element.

By containing the oxo acid compound in this manner, the melting point of the precursor oxide can be suitably lowered, the crystal growth of the lithium-containing composite oxide can be promoted, and a solid electrolyte having desired characteristics can be stably formed by the heat treatment at a relatively low temperature for a relatively short time. In addition, the adhesion between the formed solid electrolyte and the adherend can be improved.

The oxo acid compound is a compound containing an oxo anion.

Examples of the oxo anion constituting the oxo acid compound include a halogen oxoate ion, a borate ion, a carbonate ion, an orthocarbonate ion, a carboxylate ion, a silicate ion, a nitrite ion, a nitrate ion, a phosphite ion, a phosphate ion, an arsenate ion, a sulfite ion, a sulfate ion, a sulfonate ion, and a sulfinate ion. Examples of the halogen oxoate ion include a hypochlorite ion, a chlorite ion, a chlorate ion, a perchlorate ion, a hypobromite ion, a bromite ion, a bromate ion, a perbromate ion, a hypoiodite ion, an iodite ion, an iodate ion, and a periodate ion.

In particular, the oxo acid compound preferably contains, as the oxo anion, at least one of a nitrate ion and a sulfate ion, and more preferably a nitrate ion.

Accordingly, the melting point of the precursor oxide can be more suitably lowered, and the crystal growth of the lithium-containing composite oxide can be more effectively promoted. As a result, even when the heat treatment for the solid composition is performed at a lower temperature for a shorter time, a solid electrolyte having a particularly excellent ionic conductivity can be suitably obtained.

A cation constituting the oxo acid compound is not particularly limited. Examples of the cation include a hydrogen ion, an ammonium ion, a lithium ion, a lanthanum ion, a zirconium ion, a niobium ion, a tantalum ion, and an antimony ion. One type or a combination of two or more types selected from the examples of the cation may be used. The cation is preferably an ion of a constituent metal element of the solid electrolyte formed using the solid composition according to the present disclosure.

Accordingly, it is possible to more effectively prevent undesirable impurities from remaining in the formed solid electrolyte.

When the oxo acid compound is a compound containing a lithium ion and an oxo anion, the compound can be referred to an oxo acid compound and a lithium compound.

A content of the oxo acid compound in the solid composition according to the present disclosure is not particularly limited, and is preferably 0.1 mass% or more and 20 mass% or less, more preferably 1.5 mass% or more and 15 mass% or less, and even more preferably 2.0 mass% or more and 10 mass% or less.

Accordingly, in the solid electrolyte formed using the solid composition according to the present disclosure, while more reliably preventing the oxo acid compound from remaining unintentionally, the solid electrolyte can be suitably obtained from the solid composition by the heat treatment at a lower temperature for a shorter time, and the ionic conductivity of the obtained solid electrolyte can be particularly improved.

When the content of the precursor oxide in the solid composition according to the present disclosure is defined as XP (mass%) and the content of the oxo acid compound in the solid composition according to the present disclosure is defined as XO (mass%), it is preferable to satisfy a relationship of 0.013 ≤ XO/XP ≤ 0.58, more preferable to satisfy a relationship of 0.023 ≤ XO/XP ≤ 0.34, and even more preferable to satisfy a relationship of 0.03 ≤ XO/XP ≤ 0.19.

Accordingly, in the solid electrolyte formed using the solid composition according to the present disclosure, while more reliably preventing the oxo acid compound from remaining unintentionally, the solid electrolyte can be suitably obtained from the solid composition by the heat treatment at a lower temperature for a shorter time, and the ionic conductivity of the obtained solid electrolyte can be particularly improved.

When the content of the lithium compound in the solid composition according to the present disclosure is defined as XL (mass%) and the content of the oxo acid compound in the solid composition according to the present disclosure is defined as XO (mass%), it is preferable to satisfy a relationship of 0.05 ≤ XO/XL ≤ 2, more preferable to satisfy a relationship of 0.08 ≤ XO/XL ≤ 1.25, and even more preferable to satisfy a relationship of 0.11 ≤ XO/XL ≤ 0.67.

Accordingly, in the solid electrolyte formed using the solid composition according to the present disclosure, while more reliably preventing the oxo acid compound from remaining unintentionally, the solid electrolyte can be suitably obtained from the solid composition by the heat treatment at a lower temperature for a shorter time, and the ionic conductivity of the obtained solid electrolyte can be particularly improved.

The solid composition according to the present disclosure may contain a plurality of types of oxo acid compounds. When the solid composition according to the present disclosure contains the plurality of types of oxo acid compounds, a sum of contents of the oxo acid compounds in the solid composition according to the present disclosure is used as a content value.

### 1.4 Other Components

As described above, the solid composition according to the present disclosure contains the precursor oxide, the lithium compound, and the oxo acid compound, and may further contain other components. Among the components constituting the solid composition according to the present disclosure, components other than the precursor oxide, the lithium compound, and the oxo acid compound are referred to as the "other components".

Examples of the other components contained in the solid composition according to the present disclosure include an oxide having a crystal phase same as that of the solid electrolyte to be produced using the solid composition according to the present disclosure, and a solvent component used in a production process of the solid composition according to the present disclosure.

A content of the other components in the solid composition according to the present disclosure is not particularly limited, and is preferably 10 mass% or less, more preferably 5.0 mass% or less, and even more preferably 0.5 mass% or less.

The solid composition according to the present disclosure may contain a plurality of components as the other components. In this case, a sum of contents of the other components in the solid composition according to the present disclosure is used as a content value.

The solid composition preferably contains Li, La, Zr, and M where M is at least one element selected from the group consisting of Nb, Ta, and Sb. In particular, it is preferable that a ratio of substance amounts of Li, La, Zr, and M contained in the solid composition according to the present disclosure is 7-x:3:2-x:x, and 0 < x < 2.0.

Accordingly, the ionic conductivity of the solid electrolyte formed using the solid composition according to the present disclosure can be further improved.

Here, x satisfies the relationship of 0 < x < 2.0, preferably satisfies a relationship of 0.01 < x < 1.75, more preferably satisfies a relationship of 0.1 < x < 1.25, and even more preferably satisfies a relationship of 0.2 < x < 1.0.

Accordingly, the effects described above are more remarkably exhibited.

### 2. Method for Producing Solid Composition

Next, a method for producing the above-described solid composition will be described.

The solid composition according to the present disclosure can be produced, for example, as follows.

### 2.1 Preparation of Mixed Liquid

That is, first, a mixed liquid containing a metal compound containing a metal element constituting the precursor oxide in a molecule, a lithium compound, and a solvent is prepared.

The mixed liquid can be obtained by, for example, preparing a solution containing a metal compound containing a metal element constituting the precursor oxide in the molecule and a solvent, and a solution containing a lithium compound and mixing the two solutions stoichiometrically in a ratio corresponding to the composition of the solid electrolyte to be finally formed. A dispersion liquid may be used instead of the solution.

A plurality of types of solutions may be used as the solution containing the metal compound containing the metal element constituting the precursor oxide in the molecule and the solvent. Specifically, for example, a plurality of types of solutions containing separately each of the plurality of types of metal elements constituting the precursor oxide may be used. More specifically, for example, when the precursor oxide contains La, Zr, and M as the metal elements, a solution containing La, a solution containing Zr, and a solution containing M may be used in the preparation of the mixed liquid.

A plurality of types of solutions may be used as the solution containing the lithium compound. More specifically, for example, a solution containing a first lithium compound and a solution containing a second lithium compound different from the first lithium compound may be used as the solution containing the lithium compound.

For the preparation of the mixed liquid, for example, an oxo acid compound may be used in addition to the metal compound and the lithium compound. When a compound containing an oxo anion corresponding to the oxo acid compound is used as the metal compound or a compound containing an oxo anion corresponding to the oxo acid compound is used as the lithium compound, it is not necessary to separately use an oxo acid compound different from these compounds, in addition to the metal compound and the lithium compound described above.

The oxo acid compound may be added during or after a first heat treatment described later, or may be added during or after a second heat treatment, but a case in which at least one of the metal compound and the lithium compound used in the preparation of the mixed liquid contains the oxo anion corresponding to the oxo acid compound will be mainly described.

As the metal compound containing the metal element constituting the precursor oxide in the molecule, for example, the following compounds can be used.

That is, examples of a lanthanum compound which is the metal compound as a lanthanum source include a lanthanum metal salt, a lanthanum alkoxide, and a lanthanum hydroxide. One type or a combination of two or more types among the examples of the lanthanum compound may be used. Examples of the lanthanum metal salt include lanthanum chloride, lanthanum nitrate, lanthanum sulfate, lanthanum acetate, and tris(2,4-pentanedionato) lanthanum. Examples of the lanthanum alkoxide include lanthanum trimethoxide, lanthanum triethoxide, lanthanum tripropoxide, lanthanum triisopropoxide, lanthanum tributoxide, lanthanum triisobutoxide, lanthanum tri-secondary butoxide, lanthanum tertiary butoxide, and dipivaloylmethanatolanthanum. Among these, the lanthanum compound is preferably at least one selected from the group consisting of lanthanum nitrate, tris(2,4-pentanedionato) lanthanum, and lanthanum hydroxide. A hydrate thereof may be used as the lanthanum source.

Examples of a zirconium compound which is the metal compound as a zirconium source include a zirconium metal salt and a zirconium alkoxide. One type or a combination of two or more types among the examples of the zirconium compound may be used. Examples of the zirconium metal salt include zirconium chloride, zirconium oxychloride, zirconium oxynitrate, zirconium oxysulfate, zirconium oxyacetate, and zirconium acetate. Examples of the zirconium alkoxide include zirconium tetramethoxide, zirconium tetraethoxide, zirconium tetrapropoxide, zirconium tetraisopropoxide, zirconium tetrabutoxide, zirconium tetraisobutoxide, zirconium tetra-secondary butoxide, zirconium tetra-tertiary butoxide, and dipivaloylmethanatozirconium. Among these, the zirconium compound is preferably zirconium tetrabutoxide. A hydrate thereof may be used as the zirconium source.

Examples of a niobium compound which is the metal compound as a niobium source include a niobium metal salt, a niobium alkoxide, and niobium acetylacetone. One type or a combination of two or more types among the examples of the niobium compound may be used. Examples of the niobium metal salt include niobium chloride, niobium oxychloride, and niobium oxalate. Examples of the niobium alkoxide include niobium ethoxides such as niobium pentaethoxide, niobium propoxide, niobium isopropoxide, and niobium secondary butoxide. Among these, the niobium compound is preferably niobium pentaethoxide. A hydrate thereof may be used as the niobium source.

Examples of a tantalum compound which is the metal compound as a tantalum source include a tantalum metal salt and a tantalum alkoxide. One type or a combination of two or more types among the examples of the tantalum compound may be used. Examples of the tantalum metal salt include tantalum chloride and tantalum bromide. Examples of the tantalum alkoxide include tantalum pentamethoxide, tantalum pentaethoxide, tantalum pentaisopropoxide, tantalum penta-normal-propoxide, tantalum pentaisobutoxide, tantalum penta-normal-butoxide, tantalum penta-secondary butoxide, and tantalum penta-tertiary butoxide. Among these, the tantalum compound is preferably tantalum pentaethoxide. A hydrate thereof may be used as the tantalum source.

Examples of an antimony compound which is the metal compound as an antimony source include an antimony metal salt and an antimony alkoxide. One type or a combination of two or more types among the examples of the antimony compound may be used. Examples of the antimony metal salt include antimony bromide, antimony chloride, and antimony fluoride. Examples of the antimony alkoxide include antimony trimethoxide, antimony triethoxide, antimony triisopropoxide, antimony tri-normal-propoxide, antimony triisobutoxide, and antimony tri-normal-butoxide. Among these, the antimony compound is preferably antimony triisobutoxide. A hydrate thereof may be used as the antimony source.

Examples of the lithium compound include a lithium metal salt and a lithium alkoxide. One type or a combination of two or more types among the examples of the lithium compound may be used. Examples of the lithium metal salt include lithium chloride, lithium nitrate, lithium sulfate, lithium acetate, lithium hydroxide, lithium carbonate, and (2,4-pentanedionato) lithium. Examples of the lithium alkoxide include lithium methoxide, lithium ethoxide, lithium propoxide, lithium isopropoxide, lithium butoxide, lithium isobutoxide, lithium secondary butoxide, lithium tertiary butoxide, and dipivaloylmethanatolithium. Among these, the lithium compound is preferably one or two or more selected from the group consisting of lithium nitrate, lithium sulfate, and (2,4-pentanedionato) lithium. A hydrate thereof may be used as a lithium source.

The solvent is not particularly limited, and various organic solvents or the like may be used. More specifically, examples of the solvent include alcohols, glycols, ketones, esters, ethers, organic acids, aromatics, and amides. A mixed solvent containing one type or a combination of two or more types selected from the examples of the solvent may be used. Examples of the alcohols include methyl alcohol, ethyl alcohol, n-propyl alcohol, isopropyl alcohol, n-butyl alcohol, allyl alcohol, and 2-n-butoxyethanol. Examples of the glycols include ethylene glycol, propylene glycol, butylene glycol, hexylene glycol, pentanediol, hexanediol, heptanediol, and dipropylene glycol. Examples of the ketones include dimethyl ketone, methyl ethyl ketone, methyl propyl ketone, and methyl isobutyl ketone. Examples of the esters include methyl formate, ethyl formate, methyl acetate, and methyl acetoacetate. Examples of the ethers include diethylene glycol monomethyl ether, diethylene glycol monoethyl ether, diethylene glycol dimethyl ether, ethylene glycol monomethyl ether, ethylene glycol monoethyl ether, and dipropylene glycol monomethyl ether. Examples of the organic acids include formic acid, acetic acid, 2-ethyl-butyric acid, and propionic acid. Examples of the aromatics include toluene, o-xylene, and p-xylene. Examples of the amides include formamide, N,N-dimethylformamide, N,N-diethylformamide, dimethylacetamide, and N-methylpyrrolidone. Among these, the solvent is at least one of 2-n-butoxyethanol and propionic acid.

As described above, at least one of the metal compound and the lithium compound used in the preparation of the mixed liquid may contain the oxo anion corresponding to the oxo acid compound. In this case, the oxo anion preferably forms a salt with at least one of the lithium ion and the lanthanum ion.

Accordingly, an oxidation reaction during generation of the composite oxide is promoted, and the composite oxide is more likely to be nanoparticles at a lower temperature.

### 2.2 First Heat Treatment

The mixed liquid prepared as described above is subjected to a first heat treatment. Accordingly, the mixed liquid is generally gelled.

Conditions of the first heat treatment depend on a boiling point of the solvent and a vapor pressure, and a heating temperature in the first heat treatment is preferably 50°C or higher and 250°C or lower, more preferably 60°C or higher and 230°C or lower, and even more preferably 80°C or higher and 200°C or lower. In the first heat treatment, the heating temperature may be changed. For example, the first heating treatment may have a first stage in which the heat treatment is performed at a relatively low temperature, and a second stage in which the heat treatment is performed at a relatively high temperature by raising the temperature after the first stage. In such a case, a maximum temperature in the first heat treatment is preferably within the range described above.

A heating time in the first heat treatment is preferably 10 minutes or longer and 180 minutes, more preferably 20 minutes or longer and 120 minutes, and even more preferably 30 minutes or longer and 60 minutes.

The first heat treatment may be performed in any atmosphere, may be performed in an oxidizing atmosphere such as air or an oxygen gas atmosphere, or may be performed in a non-oxidizing atmosphere an inert gas such as a nitrogen gas, a helium gas, or an argon gas. The first heat treatment may be performed under reduced pressure or vacuum, or may be performed under pressurization.

In the first heat treatment, the atmosphere may be maintained under substantially the same conditions, or may be changed under different conditions. For example, the first heat treatment may have a first stage in which the heat treatment is performed in a normal pressure environment and a second stage in which the heat treatment is performed in a reduced pressure environment after the first stage.

### 2.3 Second Heat Treatment

Thereafter, the mixture obtained by the first heat treatment, that is, the gel-like mixture is subjected to a second heat treatment.

Accordingly, the solid composition containing the oxide, the lithium compound, and the oxo acid compound is obtained.

Conditions of the second heat treatment depend on the composition of the formed oxide, and a heating temperature in the second heat treatment is preferably 400°C or higher and 600°C or lower, more preferably 430°C or higher and 570°C or lower, and even more preferably 450°C or higher and 550°C or lower. In the second heat treatment, the heating temperature may be changed. For example, the second heating treatment may have a first stage in which the heat treatment is performed at a relatively low temperature, and a second stage in which the heat treatment is performed at a relatively high temperature by raising the temperature after the first stage. In such a case, a maximum temperature in the second heat treatment is preferably within the range described above.

A heating time in the second heat treatment is preferably 5 minutes or longer and 180 minutes, more preferably 10 minutes or longer and 120 minutes, and even more preferably 15 minutes or longer and 60 minutes.

The second heat treatment may be performed in any atmosphere, may be performed in an oxidizing atmosphere such as air or an oxygen gas atmosphere, or may be performed in a non-oxidizing atmosphere an inert gas such as a nitrogen gas, a helium gas, or an argon gas. The second heat treatment may be performed under reduced pressure or vacuum, or may be performed under pressurization. In particular, the second heat treatment is preferably performed in an oxidizing atmosphere.

In the second heat treatment, the atmosphere may be maintained under substantially the same conditions, or may be changed under different conditions. For example, the second heat treatment may have a first stage in which the heat treatment is performed in an inert gas atmosphere and a second stage in which the heat treatment is performed in an oxidizing atmosphere after the first stage.

In the solid composition obtained in this manner, most of the solvent used in the production process is generally removed, but a part of the solvent may remain. However, the content of the solvent in the solid composition is preferably 1.0 mass% or less, and more preferably 0.1 mass% or less.

The solid composition according to the present disclosure obtained as described above forms the solid electrolyte by heating as described in detail later, particularly by heating at a temperature higher than that in the second heat treatment described above.

Therefore, if the heat treatment for obtaining the solid electrolyte from the solid composition according to the present disclosure is main calcination, the second heat treatment described above can be called calcination. If the solid electrolyte obtained by the heat treatment described later is used as a main calcined body, the solid composition according to the present disclosure obtained through the second heat treatment described above can be called a calcined body.

### 3. Method for Producing Solid Electrolyte

Next, a method for producing the solid electrolyte according to the present disclosure will be described.

The method for producing the solid electrolyte according to the present disclosure includes a heating step of heating the solid composition according to the present disclosure at a temperature of 700°C or higher and 1,000°C or lower.

Accordingly, it is possible to provide a method for producing the solid electrolyte which can stably form a solid electrolyte having desired characteristics by a heat treatment at a relatively low temperature for a relatively short time. More specifically, when the oxo acid compound is contained in the solid composition, a melting point of the oxide is lowered, and an adhesion interface with an adherend can be formed while promoting crystal growth of the oxide in a calcination treatment which is a heat treatment at a relatively low temperature for a relatively short time. Further, due to an action of causing a reaction of incorporating lithium ions into the oxide contained in the solid composition during the reaction, a solid electrolyte that is a lithium-containing composite oxide can be formed at a low temperature. Therefore, for example, it is possible to achieve effects of preventing a decrease in ionic conductivity due to volatilization of the lithium ions which is a problem in the related art, and producing an all-solid battery having excellent battery capacity at a high load. Further, since the solid electrolyte can be produced by the heat treatment at a relatively low temperature for a relatively short time, for example, productivity of the solid electrolyte or the all-solid battery including the solid electrolyte can be further improved, and the heating step is also preferred from the viewpoint of energy saving. According to the method for producing the solid electrolyte according to the present disclosure, there is an advantage that the above-described effects can be obtained regardless of the composition of the solid composition, particularly the composition of the precursor oxide, the crystal type, and the like.

A heating temperature in the heating step of the method for producing the solid electrolyte according to the present disclosure may be 700°C or higher and 1,000°C or lower, preferably 730°C or higher and 980°C or lower, more preferably 750°C or higher and 950°C or lower, and even more preferably 780°C or higher and 930°C or lower.

Accordingly, the effects described above are more remarkably exhibited.

In the heating step of the method for producing the solid electrolyte according to the present disclosure, the heating temperature may be changed. For example, the heating step of the method for producing the solid electrolyte according to the present disclosure may have a first stage in which the heat treatment is performed at a relatively low temperature, and a second stage in which the heat treatment is performed at a relatively high temperature by raising the temperature after the first stage. In such a case, a maximum temperature in the heating step is preferably within the range described above.

A heating time in the heating step of the method for producing the solid electrolyte according to the present disclosure is not particularly limited, and is preferably 5 minutes or longer and 300 minutes or shorter, more preferably 10 minutes or longer and 120 minutes or shorter, and even more preferably 15 minutes or longer and 60 minutes or shorter.

Accordingly, the effects described above are more remarkably exhibited.

The heating step may be performed in any atmosphere, may be performed in an oxidizing atmosphere such as air or an oxygen gas atmosphere, or may be performed in a non-oxidizing atmosphere such as an inert gas such as a nitrogen gas, a helium gas, or an argon gas. The heating step may be performed under reduced pressure or vacuum, or may be performed under pressurization. In particular, the heating step is preferably performed in an oxidizing atmosphere.

In the heating step, the atmosphere may be maintained under substantially the same conditions, or may be changed under different conditions.

In the method for producing the solid electrolyte according to the present disclosure, a target solid electrolyte particularly, a high quality solid electrolyte can be obtained by the heat treatment at a relatively low temperature as described above. In the present disclosure, in addition to the heat treatment in the temperature range as described above, it is not excluded that a heat treatment at a higher temperature, in particular, a heat treatment at a higher temperature for a relatively short time is also performed.

In the method for producing the solid electrolyte according to the present disclosure, the solid composition according to the present disclosure may be subjected to the heating step as described above in a state of being mixed with other components. For example, the solid composition according to the present disclosure may be subjected to the heating step in a step of being mixed with an active material such as a positive electrode active material or a negative electrode active material.

The method for producing the solid electrolyte according to the present disclosure may include a step other than the heating step described above.

The solid electrolyte obtained by using the method for producing the solid electrolyte according to the present disclosure is generally substantially free of the oxo acid compound contained in the solid composition according to the present disclosure used as a raw material. More specifically, a content of the oxo acid compound in the solid electrolyte obtained by using the method for producing the solid electrolyte according to the present disclosure is generally 100 ppm or less, particularly preferably 50 ppm or less, and more preferably 10 ppm or less.

Accordingly, a content of undesirable impurities in the solid electrolyte can be reduced, and characteristics and reliability of the solid electrolyte can be improved.

The crystal phase of the solid electrolyte is preferably a cubic garnet type crystal, and may be, for example, a crystal phase other than a cubic garnet type crystal such as a tetragonal garnet crystal.

### 4. Secondary Battery

Next, a secondary battery to which the present disclosure is applied will be described.

The secondary battery according to the present disclosure is produced using the solid composition according to the present disclosure as described above, and can be produced, for example, by applying the method for producing a solid electrolyte according to the present disclosure as described above.

Such a secondary battery has excellent charge and discharge characteristics.

### 4.1 Secondary Battery According to First Embodiment

A secondary battery according to a first embodiment will be described below.

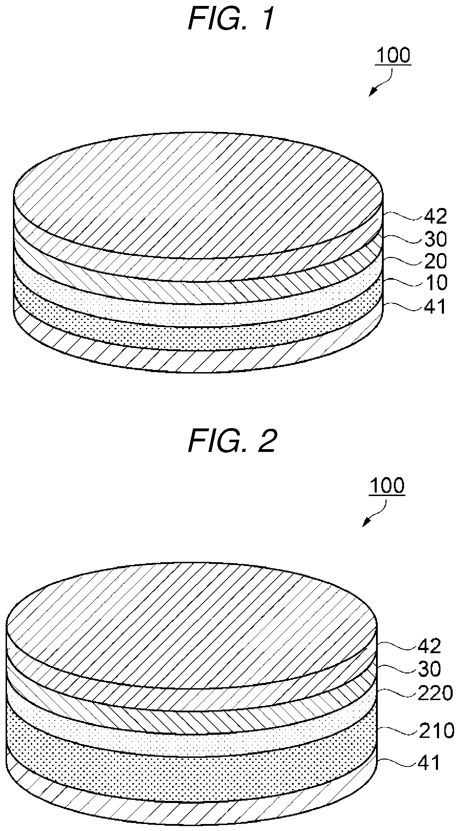

FIG. 1 is a schematic perspective view schematically showing a configuration of a lithium ion battery as the secondary battery according to the first embodiment.

As shown in FIG. 1, a lithium ion battery 100 as a secondary battery includes a positive electrode 10, a solid electrolyte layer 20 and a negative electrode 30 which are sequentially stacked on the positive electrode 10. The lithium ion battery 100 further includes a current collector 41 in contact with the positive electrode 10 at a surface side opposite to a surface where the positive electrode 10 faces the solid electrolyte layer 20, and a current collector 42 in contact with the negative electrode 30 at a surface side opposite to a surface where the negative electrode 30 faces the solid electrolyte layer 20. Since each of the positive electrode 10, the solid electrolyte layer 20, and the negative electrode 30 is formed into a solid phase, the lithium ion battery 100 is a chargable and dischargable all-solid secondary battery.

A shape of the lithium ion battery 100 is not particularly limited, and may be a polygonal plate shape or the like. In the configuration shown in the figure, the lithium ion battery 100 has a disc shape. A size of the lithium ion battery 100 is not particularly limited. A diameter of the lithium ion battery 100 is, for example, 10 mm or more and 20 mm or less, and a thickness of the lithium ion battery 100 is, for example, 0.1 mm or more and 1.0 mm or less.

When the lithium ion battery 100 is thus small and thin, the lithium ion battery 100 can be a chargable and dischargable all-solid body, and can be suitably used as a power source for a mobile information terminal such as a smartphone. As will be described below, the lithium ion battery 100 may be used for applications other than the power source of the mobile information terminal.

Hereinafter, configurations of the lithium ion battery 100 will be described.

### 4.1.1 Solid Electrolyte Layer

The solid electrolyte layer 20 is formed using the above-described solid composition according to the present disclosure.

Accordingly, an ionic conductivity of the solid electrolyte layer 20 is improved. Adhesion of the solid electrolyte layer 20 to the positive electrode 10 and the negative electrode 30 can be improved. As described above, characteristics and reliability of the entire lithium ion battery 100 can be particularly improved.

A thickness of the solid electrolyte layer 20 is not particularly limited, and is preferably 0.3 µm or more and 1,000 µm or less, more preferably 0.5 µm or more and 100 µm or less from a viewpoint of charge and discharge rates.

From a viewpoint of preventing a short circuit between the positive electrode 10 and the negative electrode 30 caused by a dendritic crystal of lithium deposited at a negative electrode 30 side, a value obtained by dividing a measured weight of the solid electrolyte layer 20 by a value obtained by multiplying an apparent volume of the solid electrolyte layer 20 by a theoretical density of a solid electrolyte material, that is, a sintered density, is preferably 50% or more, and more preferably 90% or more.

Examples of a method for forming the solid electrolyte layer 20 include a green sheet method, a press calcination method, and a casting calcination method. A specific example of the method for forming the solid electrolyte layer 20 will be described in detail later. For example, a three-dimensional pattern structure such as a dimple, a trench, or a pillar may be formed on a surface of the solid electrolyte layer 20 in contact with the positive electrode 10 or the negative electrode 30 in order to improve adhesion between the solid electrolyte layer 20 and the positive electrode 10 and adhesion between the solid electrolyte layer 20 and the negative electrode 30, and increase an output or a battery capacity of the lithium ion battery 100 by increasing a specific surface area.

### 4.1.2 Positive Electrode

The positive electrode 10 may be formed of any material as long as the material is a positive electrode active material capable of repeatedly storing and releasing electrochemical lithium ions.

Specifically, the positive electrode active material constituting the positive electrode 10 may be a lithium composite oxide containing, for example, at least Li and one or more elements selected from the group consisting of V, Cr, Mn, Fe, Co, Ni, and Cu. Examples of such a composite oxide include LiCoO₂, LiNiO₂, LiMn₂O₄, Li₂Mn₂O₃, LiCr_{0.5}Mn_{0.5}O₂, LiFePO₄, Li₂FeP₂O₇, LiMnPO₄, LiFeBO₃, Li₃V₂(PO4)₃, Li₂CuO₂, Li₂FeSiO₄, and Li₂MnSiO₄. Examples of the positive electrode active material constituting the positive electrode 10 include a fluoride such as LiFeF₃, a boride complex compound such as LiBH₄ and Li₄BN₃H₁₀, an iodine complex compound such as a polyvinylpyridine-iodine complex, and a non-metal compound such as sulfur.

In view of a conductivity and an ion diffusion distance, the positive electrode 10 is preferably formed into a thin film on one surface of the solid electrolyte layer 20.

A thickness of the positive electrode 10 formed into a thin film is not particularly limited, and is preferably 0.1 µm or more and 500 µm or less, and more preferably 0.3 µm or more and 100 µm or less.

Examples of a method for forming the positive electrode 10 include a vapor deposition method such as a vacuum deposition method, a sputtering method, a CVD method, a PLD method, an ALD method, and an aerosol deposition method, and a chemical deposition method using a solution such as a sol-gel method and an MOD method. For example, fine particles of the positive electrode active material may be slurried with an appropriate binder, squeegeeing or screen printing may be performed to form a coating film, and the coating film may be dried and calcined to be baked on the surface of the solid electrolyte layer 20.

### 4.1.3 Negative Electrode

The negative electrode 30 may be formed of any material as long as the material is a so-called negative electrode active material that repeatedly stores and releases electrochemical lithium ions at a potential lower than that of the material selected as the positive electrode 10.

Specifically, examples of the negative electrode active material constituting the negative electrode 30 include Nb₂O₅, V₂O₅, TiO₂, In₂O₃, ZnO, SnO₂, NiO, ITO, AZO, GZO, ATO, FTO, and a lithium composite oxide such as Li₄Ti₅O₁₂ and Li₂Ti₃O₇. Examples of the negative electrode active material further include metals and alloys such as Li, Al, Si, Si-Mn, Si-Co, Si-Ni, Sn, Zn, Sb, Bi, In, and Au, a carbon material, and a substance in which lithium ions are inserted between layers of carbon materials, such as LiC₂₄ and LiC₆.

In view of a conductivity and an ion diffusion distance, the negative electrode 30 is preferably formed into a thin film on the other one surface of the solid electrolyte layer 20.

A thickness of the negative electrode 30 formed into a thin film is not particularly limited, and is preferably 0.1 µm or more and 500 µm or less, and more preferably 0.3 µm or more and 100 µm or less.

Examples of a method for forming the negative electrode 30 include a vapor deposition method such as a vacuum deposition method, a sputtering method, a CVD method, a PLD method, an ALD method, and an aerosol deposition method, and a chemical deposition method using a solution such as a sol-gel method and a MOD method. For example, fine particles of the negative electrode active material may be slurried with an appropriate binder, squeegeeing or screen printing may be performed to form a coating film, and the coating film may be dried and calcined to be baked on the surface of the solid electrolyte layer 20.

### 4.1.4 Current Collector

The current collectors 41 and 42 are conductors provided to transfer electrons to and receive electrons from the positive electrode 10 or the negative electrode 30. The current collector is generally formed of a material having a sufficiently small electric resistance and having substantially no change in an electrical conduction characteristic or a mechanical structure during charge and discharge. Specifically, examples of a constituent material of the current collector 41 of the positive electrode 10 include Al, Ti, Pt, and Au. Examples of a constituent material of the current collector 42 of the negative electrode 30 suitably include Cu.

The current collectors 41 and 42 are generally provided to reduce the corresponding contact resistance with respect to the positive electrode 10 or the negative electrode 30. Examples of a shape of the current collectors 41 and 42 include a plate shape and a mesh shape.

A thickness of each of the current collectors 41 and 42 is not particularly limited, and is preferably 7 µm or more and 85 µm or less, and more preferably 10 µm or more and 60 µm or less.

In the configuration shown in the figure, the lithium ion battery 100 includes a pair of current collectors 41 and 42. Alternatively, the lithium ion battery 100 may include only the current collector 41 of the current collectors 41 and 42 when, for example, a plurality of lithium ion batteries 100 are stacked and electrically connected in series.

The lithium ion battery 100 may be used for any application. Examples of an electronic device to which the lithium ion battery 100 is applied as a power source include a personal computer, a digital camera, a mobile phone, a smartphone, a music player, a tablet terminal, a watch, a smart watch, various printers such as an inkjet printer, a television, a projector, a head-up display, wearable terminals such as wireless headphones, wireless earphones, smart glasses, and a head mounted display, a video camera, a video tape recorder, a car navigation device, a drive recorder, a pager, an electronic notebook, an electronic dictionary, an electronic translator, a calculator, an electronic game device, a toy, a word processor, a workstation, a robot, a video phone, a security television monitor, electronic binoculars, a point of sales (POS) terminal, a medical device, a fish finder, various measuring devices, a mobile terminal base station device, various meters and gauges for a vehicle, a railway vehicle, an aircraft, a helicopter, a ship, and the like, a flight simulator, and a network server. The lithium ion battery 100 may also be applied to a moving object such as an automobile and a ship. More specifically, the lithium ion battery 100 can be suitably applied as a storage battery for an electric vehicle, a plug-in hybrid vehicle, a hybrid vehicle, or a fuel cell vehicle. In addition, the lithium ion battery 100 can be applied as a household power source, an industrial power source, a solar power storage battery, and the like.

### 4.2 Secondary Battery According to Second Embodiment

Next, a secondary battery according to a second embodiment will be described.

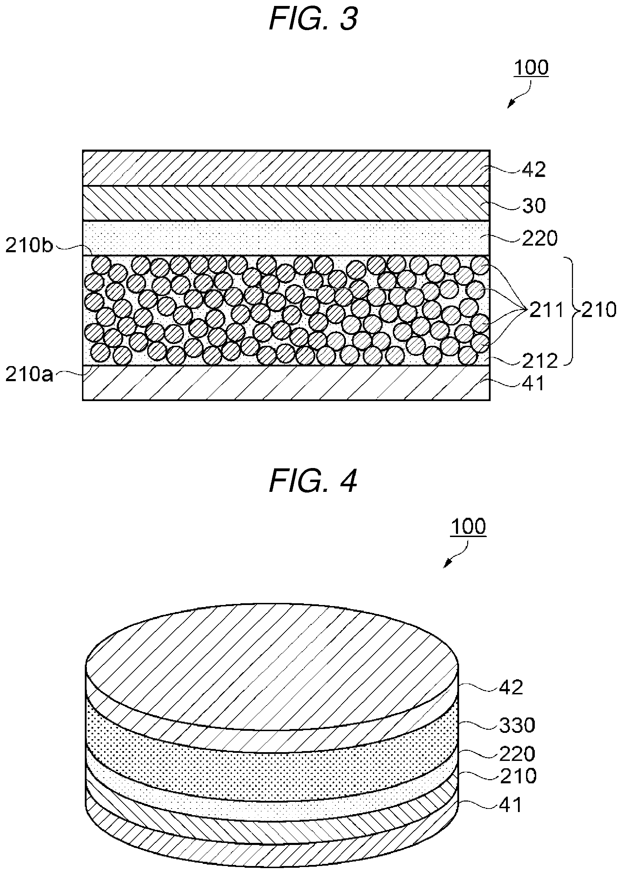

FIG. 2 is a schematic perspective view schematically showing a configuration of a lithium ion battery as the secondary battery according to the second embodiment. FIG. 3 is a schematic cross-sectional view schematically showing a structure of the lithium ion battery as the secondary battery according to the second embodiment.

Hereinafter, the secondary battery according to the second embodiment will be described with reference to the drawings. Differences from the embodiment described above will be mainly described, and description of the same matters will be omitted.

As shown in FIG. 2, the lithium ion battery 100 as the secondary battery according to the present embodiment includes a positive electrode mixture 210 functioning as a positive electrode, and an electrolyte layer 220 and the negative electrode 30 that are sequentially stacked on the positive electrode mixture 210. The lithium ion battery 100 further includes the current collector 41 in contact with the positive electrode mixture 210 at a surface side opposite to a surface where the positive electrode mixture 210 faces the electrolyte layer 220, and the current collector 42 in contact with the negative electrode 30 at a surface side opposite to a surface where the negative electrode 30 faces the electrolyte layer 220.

Hereinafter, the positive electrode mixture 210 and the electrolyte layer 220 that are different from the configuration of the lithium ion battery 100 according to the embodiment described above will be described.

### 4.2.1 Positive Electrode Mixture

As shown in FIG. 3, the positive electrode mixture 210 of the lithium ion battery 100 according to the present embodiment contains particulate positive electrode active materials 211 and a solid electrolyte 212. In such a positive electrode mixture 210, an area of an interface where the particulate positive electrode active materials 211 and the solid electrolyte 212 are in contact with each other is increased, so that a battery reaction rate of the lithium ion battery 100 can be further increased.

An average particle diameter of the positive electrode active materials 211 is not particularly limited, and is preferably 0.1 µm or more and 150 µm or less, and more preferably 0.3 µm or more and 60 µm or less.

Accordingly, it is easy to achieve both an actual capacity density close to a theoretical capacity of the positive electrode active materials 211 and high charge and discharge rates.

In the present specification, the average particle diameter refers to an average particle diameter on a volume basis, and can be calculated by, for example, adding a sample into methanol and measuring, by a Coulter counter particle size distribution analyzer (TA-II type manufactured by COULTER ELECTRONICS Inc.), a dispersion liquid dispersed for 3 minutes by an ultrasonic disperser using an aperture of 50 µm.

A particle size distribution of the positive electrode active materials 211 is not particularly limited. For example, in a particle size distribution having one peak, a half width of the peak may be 0.15 µm or more and 19 µm or less. The particle size distribution of the positive electrode active materials 211 may have two or more peaks.

Although a shape of the particulate positive electrode active materials 211 is shown as a spherical shape in FIG. 3, the shape of the positive electrode active materials 211 is not limited to the spherical shape, and may have various forms such as a columnar shape, a plate shape, a scale shape, a hollow shape, and an irregular shape. Alternatively, two or more of the various forms may be combined.

Examples of a constituent material of the positive electrode active materials 211 include materials same as the above-described constituent materials of the positive electrode 10 according to the first embodiment.

Coating layers may be formed on surfaces of the positive electrode active materials 211 in order to reduce an interface resistance with the solid electrolyte 212, improve an electronic conductivity, and the like. An interface resistance of lithium ion conduction can be further reduced by forming a thin film of LiNbO₃, Al₂O₃, ZrO₂, Ta₂O₅, and the like on surfaces of particles of the positive electrode active materials 211 formed of LiCoO₂. A thickness of the coating layers is not particularly limited, and is preferably 3 nm or more and 1 µm or less.

In the present embodiment, the positive electrode mixture 210 contains the solid electrolyte 212 in addition to the positive electrode active materials 211 described above. The solid electrolyte 212 is present so as to fill spaces between the particles of the positive electrode active materials 211, or to be in contact with, particularly in close contact with, the surfaces of the positive electrode active materials 211.

The solid electrolyte 212 is formed using the above-described solid composition according to the present disclosure.

Accordingly, an ionic conductivity of the solid electrolyte 212 is particularly improved. Adhesion of the solid electrolyte 212 to the positive electrode active materials 211 or the electrolyte layer 220 is improved. As described above, characteristics and reliability of the entire lithium ion battery 100 can be particularly improved.

When a content of the positive electrode active materials 211 in the positive electrode mixture 210 is XA (mass%) and a content of the solid electrolyte 212 in the positive electrode mixture 210 is XS (mass%), it is preferable to satisfy a relationship of 0.1 ≤ XS/XA ≤ 8.3, more preferable to satisfy a relationship of 0.3 ≤ XS/XA ≤ 2.8, and even more preferable to satisfy a relationship of 0.6 ≤ XS/XA ≤ 1.4.

In addition to the positive electrode active materials 211 and the solid electrolyte 212, the positive electrode mixture 210 may contain a conductive auxiliary and a binder.

The conductive auxiliary may be any conductor as long as the conductor can ignore electrochemical interaction at a positive electrode reaction potential. More specifically, examples of the conductive auxiliary include carbon materials such as acetylene black, Ketjen black, and carbon nanotubes, precious metals such as palladium and platinum, and conductive oxides such as SnO₂, ZnO, RuO₂ or ReO₃, and Ir₂O₃.

A thickness of the positive electrode mixture 210 is not particularly limited, and is preferably 0.1 µm or more and 500 µm or less, and more preferably 0.3 µm or more and 100 µm or less.

### 4.2.2 Electrolyte Layer

The electrolyte layer 220 is preferably formed of a material that is the same as or is the same type as the material of the solid electrolyte 212 from a viewpoint of an interface impedance between the electrolyte layer 220 and the positive electrode mixture 210. Alternatively, the electrolyte layer 220 may be formed of a material different from the material of the solid electrolyte 212. For example, the electrolyte layer 220 may be formed of a material having a composition different from a composition of the solid electrolyte 212 formed using the above-described solid composition according to the present disclosure. The electrolyte layer 220 may be another oxide solid electrolyte not formed of the solid composition according to the present disclosure, for example, a sulfide solid electrolyte, a nitride solid electrolyte, a halide solid electrolyte, a hydride solid electrolyte, a dry polymer electrolyte, and a quasi-solid electrolyte crystalline material or amorphous material. The electrolyte layer 220 may be formed of a material obtained by combining two or more types of materials selected from above.

Examples of an oxide of the crystalline material include: a perovskite type crystal or a perovskite-like crystal in which a part of elements constituting Li_{0.35}La_{0.55}TiO₃ and Li_{0.2}La_{0.27}NbO₃ and crystals thereof are substituted by N, F, Al, Sr, Sc, Nb, Ta, Sb, a lanthanoid element, and the like; a garnet type crystal or a garnet-like crystal in which a part of elements constituting Li₇La₃Zr₂O₁₂, Li₅La₃Nb₂O₁₂, Li₅BaLa₂TaO₁₂ and crystals thereof are substituted by N, F, Al, Sr, Sc, Nb, Ta, Sb, a lanthanoid element, and the like; a NASICON type crystal in which a part of elements constituting Li_{1.3}Ti_{1.7}Al_{0.3}(PO₄)₃, Li_{1.4}Al_{0.4}Ti_{1.6}(PO₄)₃, Li_{1.4}Al_{0.4}Ti_{1.4}Ge_{0.2}(PO₄)₃ and crystals thereof are substituted by N, F, Al, Sr, Sc, Nb, Ta, Sb, a lanthanoid element, and the like; a LISICON type crystal such as Li₁₄ZnGe₄O₁₆; and other crystalline materials such as Li_{3.4}V_{0.6}Si_{0.4}O₄, Li_{3.6}V_{0.4}Ge_{0.6}O₄, and Li₂₊ₓC₁₋ₓBₓO₃.

Examples of a sulfide of the crystalline material include Li₁₀GeP₂S₁₂, Li_{9.6}P₃S₁₂, Li_{9.54}Si_{1.74}P_{1.44}S_{11.7}Cl_{0.3}, and Li₃PS₄.

Examples of other amorphous materials include Li₂O-TiO₂, La₂O₃-Li₂O-TiO₂, LiNbO₃, LiSO₄, Li₄SiO₄, Li₃PO₄-Li₄SiO₄, Li₄GeO₄-Li₃VO₄, Li₄SiO₄-Li₃VO₄, Li₄GeO₄-Zn₂GeO₂, Li₄SiO₄-LiMoO₄, Li₄SiO₄-Li₄ZrO₄, SiO₂-P₂O₅-Li₂O, SiO₂-P₂O₅-LiCl, Li₂O-LiCl-B₂O₃, LiAlCl₄, LiAlF₄, LiF-Al₂O₃, LiBr-Al₂O₃, Li_{2.88}PO_{3.73}N_{0.14}, Li₃N-LiCl, Li₆NBr₃, Li₂S-SiS₂, and Li₂S-SiS₂-P₂S₅.

When the electrolyte layer 220 is formed of a crystalline material, the crystalline material preferably has a crystal structure such as a cubic crystal having small crystal surface anisotropy in a direction of lithium ion conduction. When the electrolyte layer 220 is formed of an amorphous material, anisotropy of lithium ion conduction is reduced. Therefore, any one of the crystalline materials and the amorphous materials described above is preferably used as a solid electrolyte constituting the electrolyte layer 220.

A thickness of the electrolyte layer 220 is preferably 0.1 µm or more and 100 µm or less, and more preferably 0.2 µm or more and 10 µm or less. When the thickness of the electrolyte layer 220 is within the above range, an internal resistance of the electrolyte layer 220 can be further reduced, and an occurrence of a short circuit between the positive electrode mixture 210 and the negative electrode 30 can be more effectively prevented.

For example, a three-dimensional pattern structure such as a dimple, a trench, or a pillar may be formed, for example, on a surface of the electrolyte layer 220 in contact with the negative electrode 30 in order to improve adhesion between the electrolyte layer 220 and the negative electrode 30, and increase an output or a battery capacity of the lithium ion battery 100 by increasing a specific surface area.

### 4.3 Secondary Battery According to Third Embodiment

Next, a secondary battery according to a third embodiment will be described.

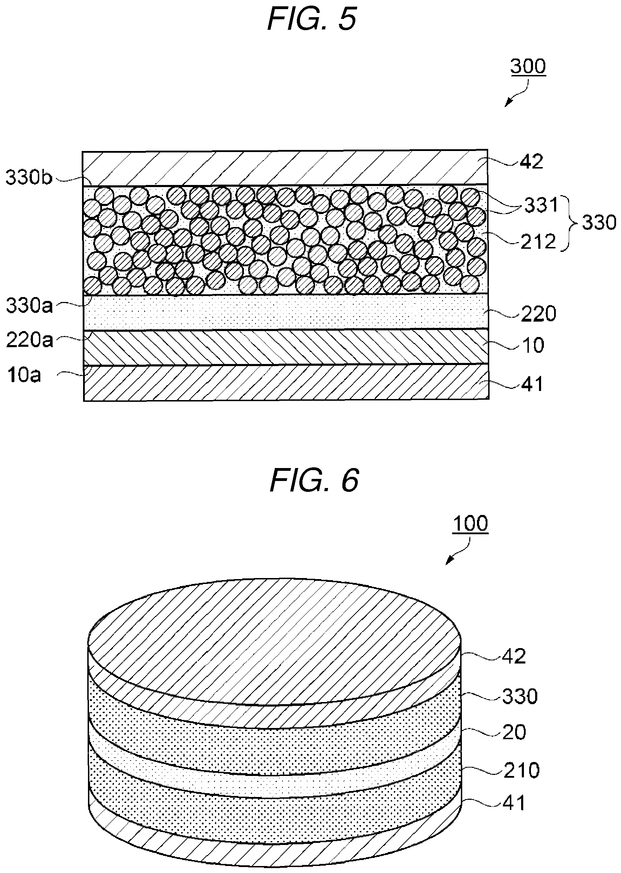

FIG. 4 is a schematic perspective view schematically showing a configuration of a lithium ion battery as the secondary battery according to the third embodiment. FIG. 5 is a schematic cross-sectional view schematically showing a structure of the lithium ion battery as the secondary battery according to the third embodiment.

Hereinafter, the secondary battery according to the third embodiment will be described with reference to the drawings. Differences from the embodiments described above will be mainly described, and description of the same matters will be omitted.

As shown in FIG. 4, the lithium ion battery 100 as the secondary battery according to the present embodiment includes the positive electrode 10, the electrolyte layer 220, and a negative electrode mixture 330 functioning as a negative electrode. The electrolyte layer 220 and the negative electrode mixture 330 are sequentially stacked on the positive electrode 10. The lithium ion battery 100 further includes the current collector 41 in contact with the positive electrode 10 at a surface side opposite to a surface where the positive electrode 10 faces the electrolyte layer 220, and the current collector 42 in contact with the negative electrode mixture 330 at a surface side opposite to a surface where the negative electrode mixture 330 faces the electrolyte layer 220.

Hereinafter, the negative electrode mixture 330 different from the configuration of the lithium ion battery 100 according to the embodiments described above will be described.

### 4.3.1 Negative Electrode Mixture

As shown in FIG. 5, the negative electrode mixture 330 of the lithium ion battery 100 according to the present embodiment includes particulate negative electrode active materials 331 and the solid electrolyte 212. In such a negative electrode mixture 330, an area of an interface where the particulate negative electrode active materials 331 and the solid electrolyte 212 are in contact with each other is increased, so that a battery reaction rate of the lithium ion battery 100 can be further increased.

An average particle diameter of the negative electrode active materials 331 is not particularly limited, and is preferably 0.1 µm or more and 150 µm or less, and more preferably 0.3 µm or more and 60 µm or less.

Accordingly, it is easy to achieve both an actual capacity density close to a theoretical capacity of the negative electrode active materials 331 and high charge and discharge rates.

A particle size distribution of the negative electrode active materials 331 is not particularly limited. For example, in a particle size distribution having one peak, a half width of the peak may be 0.1 µm or more and 18 µm or less. The particle size distribution of the negative electrode active materials 331 may have two or more peaks.

Although a shape of the particulate negative electrode active materials 331 is shown as a spherical shape in FIG. 5, the shape of the negative electrode active materials 331 is not limited to the spherical shape, and may have various forms such as a columnar shape, a plate shape, a scale shape, a hollow shape, and an irregular shape. Alternatively, two or more of the various forms may be combined.

Examples of constituent materials of the negative electrode active materials 331 include materials same as the above-described constituent materials of the negative electrode 30 according to the first embodiment.

In the present embodiment, the negative electrode mixture 330 contains the solid electrolyte 212 in addition to the negative electrode active materials 331 described above. The solid electrolyte 212 is present so as to fill spaces between particles of the negative electrode active materials 331, or to be in contact with, particularly in close contact with, surfaces of the negative electrode active materials 331.

The solid electrolyte 212 is formed using the above-described solid composition according to the present disclosure. Accordingly, an ionic conductivity of the solid electrolyte 212 is particularly improved. Adhesion of the solid electrolyte layer 212 to the negative electrode active materials 331 or the electrolyte layer 220 can be improved. As described above, characteristics and reliability of the entire lithium ion battery 100 can be particularly improved.

When a content of the negative electrode active materials 331 in the negative electrode mixture 330 is XB (mass%) and a content of the solid electrolyte 212 in the negative electrode mixture 330 is XS (mass%), it is preferable to satisfy a relationship of 0.14 ≤ XS/XB ≤ 26, more preferable to satisfy a relationship of 0.44 ≤ XS/XB ≤ 4.1, and even more preferable to satisfy a relationship of 0.89 ≤ XS/XB ≤ 2.1.

In addition to the negative electrode active materials 331 and the solid electrolyte 212, the negative electrode mixture 330 may contain a conductive auxiliary and a binder.

The conductive auxiliary may be any conductor as long as the conductor can ignore electrochemical interaction at a positive electrode reaction potential. More specifically, examples of the conductive auxiliary include carbon materials such as acetylene black, Ketjen black, and carbon nanotubes, precious metals such as palladium and platinum, and conductive oxides such as SnO₂, ZnO, RuO₂ or ReO₃, and Ir₂O₃.

A thickness of the negative electrode mixture 330 is not particularly limited, and is preferably 0.1 µm or more and 500 µm or less, and more preferably 0.3 µm or more and 100 µm or less.

### 4.4 Secondary Battery According to Fourth Embodiment

Next, a secondary battery according to a fourth embodiment will be described.

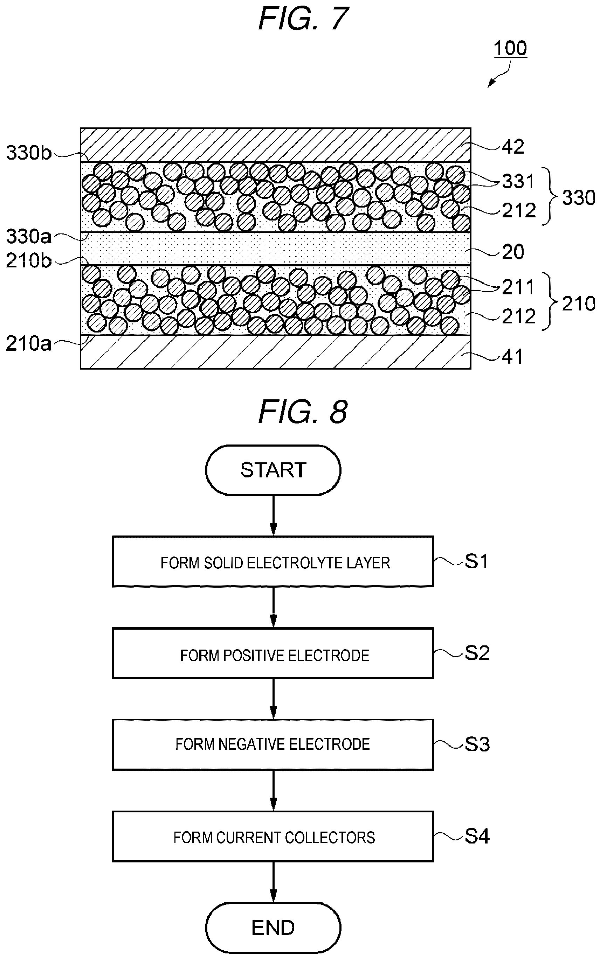

FIG. 6 is a schematic perspective view schematically showing a configuration of a lithium ion battery as the secondary battery according to the fourth embodiment. FIG. 7 is a schematic cross-sectional view schematically showing a structure of the lithium ion battery as the secondary battery according to the fourth embodiment.

Hereinafter, the secondary battery according to the fourth embodiment will be described with reference to the drawings. Differences from the embodiments described above will be mainly described, and description of the same matters will be omitted.

As shown in FIG. 6, the lithium ion battery 100 as the secondary battery according to the present embodiment includes the positive electrode mixture 210, and the solid electrolyte layer 20 and the negative electrode mixture 330 that are sequentially stacked on the positive electrode mixture 210. The lithium ion battery 100 further includes the current collector 41 in contact with the positive electrode mixture 210 at a surface side opposite to a surface where the positive electrode mixture 210 faces the solid electrolyte layer 20, and the current collector 42 in contact with the negative electrode mixture 330 at a surface side opposite to a surface where the negative electrode mixture 330 faces the solid electrolyte layer 20.

These configurations preferably satisfy the same condition as those described for corresponding configurations in the embodiments described above.

In the first to fourth embodiments, another layer may be provided between layers constituting the lithium ion battery 100 or on surfaces of the layers. Examples of such a layer include an adhesive layer, an insulation layer, and a protective layer.

### 5. Method for Producing Secondary Battery

Next, a method for producing the above-described secondary battery will be described.

### 5.1 Method for Producing Secondary Battery According to First Embodiment

Next, a method for producing the secondary battery according to the first embodiment will be described below.

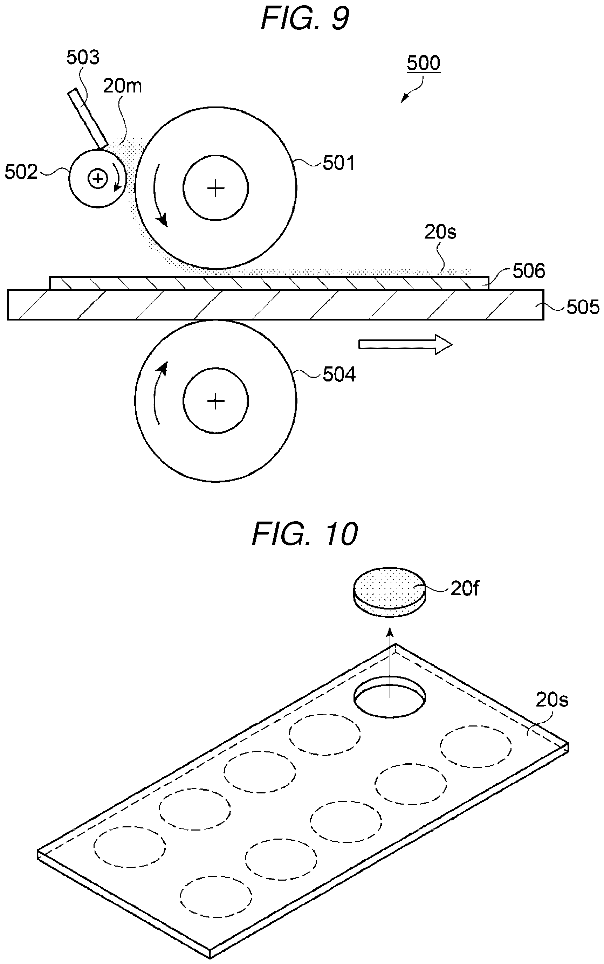

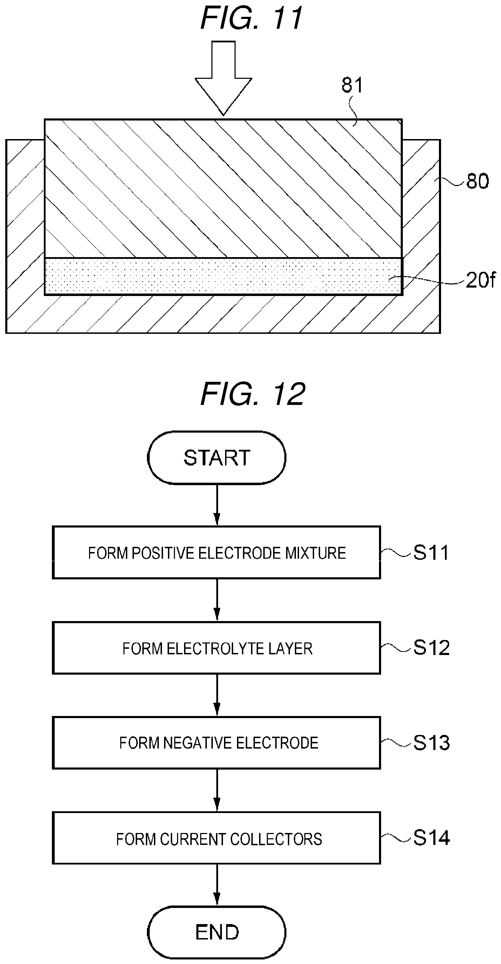

FIG. 8 is a flowchart showing a method for producing the lithium ion battery as the secondary battery according to the first embodiment. FIGS. 9 and 10 are schematic views schematically showing the method for producing the lithium ion battery as the secondary battery according to the first embodiment. FIG. 11 is a schematic cross-sectional view schematically showing another method for forming a solid electrolyte layer.

As shown in FIG. 8, the method for producing the lithium ion battery 100 according to the present embodiment includes step S1, step S2, step S3, and step S4.

Step S1 is a step of forming the solid electrolyte layer 20. Step S2 is a step of forming the positive electrode 10. Step S3 is a step of forming the negative electrode 30. Step S4 is a step of forming the current collectors 41 and 42.

### 5.1.1 Step S1

In the step of forming the solid electrolyte layer 20 in step S1, the solid electrolyte layer 20 is formed by, for example, a green sheet method using the solid composition according to the present disclosure. More specifically, the solid electrolyte layer 20 can be formed as follows.

That is, first, a solution in which a binder such as polypropylene carbonate is dissolved in a solvent such as 1,4-dioxane is prepared, and the solution and the solid composition according to the present disclosure are mixed to obtain a slurry 20m. The slurry 20m may be prepared by further using a dispersant, a diluent, a moisturizer, or the like as needed.

Next, a solid electrolyte forming sheet 20s is formed using the slurry 20m. More specifically, as shown in FIG. 9, the slurry 20m is applied, by using, for example, a fully automatic film applicator 500, at a predetermined thickness onto a substrate 506 such as a polyethylene terephthalate film to form the solid electrolyte forming sheet 20s. The fully automatic film applicator 500 includes an application roller 501 and a doctor roller 502. A squeegee 503 is provided so as to be in contact with the doctor roller 502 from above. A transport roller 504 is provided at a position facing the application roller 501 from below. A stage 505 on which the substrate 506 is placed is inserted between the application roller 501 and the transport roller 504 so as to be transported in a predetermined direction. The slurry 20m is charged to a side where the squeegee 503 is provided in a gap formed between the application roller 501 and the doctor roller 502 in a transport direction of the stage 505. The application roller 501 and the doctor roller 502 are rotated so as to push the slurry 20m downward from the gap, and the slurry 20m having a predetermined thickness is applied on a surface of the application roller 501. At the same time, the transport roller 504 is rotated and the stage 505 is transported to bring the substrate 506 into contact with the application roller 501 on which the slurry 20m is applied. Accordingly, the slurry 20m applied on the application roller 501 is transferred onto the substrate 506 in a sheet shape, to obtain the solid electrolyte forming sheet 20s.

Thereafter, the solvent is removed from the solid electrolyte forming sheet 20s formed on the substrate 506, and the solid electrolyte forming sheet 20s is peeled off from the substrate 506. As shown FIG. 10, the solid electrolyte forming sheet 20s is punched into a predetermined size using a punching die, and a molded object 20f is formed.

Thereafter, the solid electrolyte layer 20 as the main calcined body is obtained by subjecting the molded object 20f to a heating step at a temperature of 700°C or higher and 1,000°C or lower. The heating time and the atmosphere in the heating step are as described above.

The slurry 20m may be pressed and pushed by the application roller 501 and the doctor roller 502 to form the solid electrolyte forming sheet 20s having a predetermined thickness, so that a sintered density of the solid electrolyte layer 20 after calcination is 90% or more.

### 5.1.2 Step S2

The method proceeds to step S2 after step S1.

In the step of forming the positive electrode 10 in step S2, the positive electrode 10 is formed on one surface of the solid electrolyte layer 20. More specifically, for example, first, a sputtering device is used to perform sputtering using LiCoO₂ as a target in an inert gas such as an argon gas, thereby forming a LiCoO₂ layer on the surface of the solid electrolyte layer 20. Thereafter, the LiCoO₂ layer formed on the solid electrolyte layer 20 is calcined in an oxidizing atmosphere to convert a crystal of the LiCoO₂ layer into a high temperature phase crystal, and the LiCoO₂ layer can be formed as the positive electrode 10. A calcination condition for the LiCoO₂ layer is not particularly limited. A heating temperature may be 400°C or higher and 600°C or lower, and a heating time may be 1 hour or longer and 3 hours or shorter.

### 5.1.3 Step S3

The method proceeds to step S3 after step S2.

In the step of forming the negative electrode 30 in step S3, the negative electrode 30 is formed on the other surface of the solid electrolyte layer 20, that is, on a surface opposite to the surface where the positive electrode 10 is formed. More specifically, for example, a vacuum deposition device is used to form a thin film of metal Li on the surface of the solid electrolyte layer 20 that is opposite to the surface where the positive electrode 10 is formed, so that the negative electrode 30 can be formed. A thickness of the negative electrode 30 may be, for example, 0.1 µm or more and 500 µm or less.

### 5.1.4 Step S4

The method proceeds to step S4 after step S3.

In the step of forming the current collectors 41 and 42 in step S4, the current collector 41 is formed to be in contact with the positive electrode 10 and the current collector 42 is formed to be in contact with the negative electrode 30. More specifically, an aluminum foil having a circular shape formed by die cutting or the like can be pressed against and joined with the positive electrode 10, and the current collector 41 can be formed. A copper foil having a circular shape formed by die cutting or the like can be pressed against and joined with the negative electrode 30, and the current collector 42 can be formed. A thickness of each of the current collectors 41 and 42 is not particularly limited, and may be, for example, 10 µm or more and 60 µm. Only one of the current collectors 41 and 42 may be formed in the present step.

The method for forming the solid electrolyte layer 20 is not limited to the green sheet method shown in step S1. The following method or the like can be adopted as another method for forming the solid electrolyte layer 20. That is, as shown in FIG. 11, the molded object 20f may be obtained by filling the solid composition according to the present disclosure in a powder form into a pellet die 80, closing the pellet die using a lid 81, and pressing the lid 81 to perform uniaxial press molding. Thereafter, a treatment for the molded object 20f may be performed in the same manner as described above. A die having an exhaust port (not shown) can be suitably used as the pellet die 80.

### 5.2 Method for Producing Secondary Battery According to Second Embodiment

Next, a method for producing the secondary battery according to the second embodiment will be described.

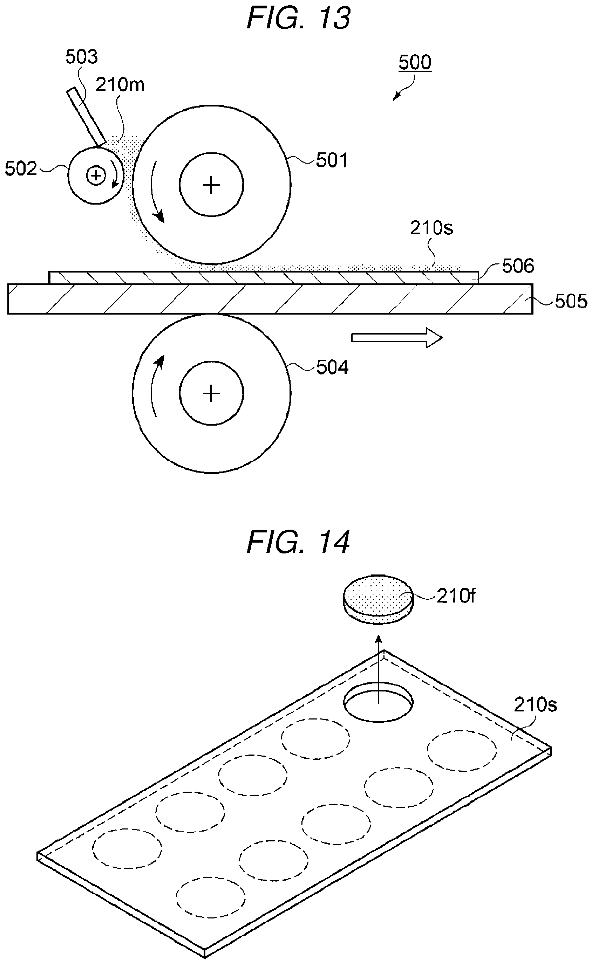

FIG. 12 is a flowchart showing a method for producing a lithium ion battery as the secondary battery according to the second embodiment. FIGS. 13 and 14 are schematic views schematically showing the method for producing the lithium ion battery as the secondary battery according to the second embodiment.

Hereinafter, the method for producing the secondary battery according to the second embodiment will be described with reference to the drawings. Differences from the embodiments described above will be mainly described, and description of the same matters will be omitted.

As shown in FIG. 12, the method for producing the lithium ion battery 100 according to the present embodiment includes step S11, step S12, step S13, and step S14.

Step S11 is a step of forming the positive electrode mixture 210. Step S12 is a step of forming the electrolyte layer 220. Step S13 is a step of forming the negative electrode 30. Step S14 is a step of forming the current collectors 41 and 42.

### 5.2.1 Step S11

In the step of forming the positive electrode mixture 210 in step S11, the positive electrode mixture 210 is formed.

For example, the positive electrode mixture 210 can be formed as follows.

That is, first, a slurry 210m which is a mixture of the positive electrode active materials 211 such as LiCoO₂, the solid composition according to the present disclosure, a binder such as polypropylene carbonate, and a solvent such as 1,4-dioxane is obtained. The slurry 210m may be prepared by further using a dispersant, a diluent, a moisturizer, or the like as needed.

Next, a positive electrode mixture forming sheet 210s is formed using the slurry 210m. More specifically, as shown in FIG. 13, the slurry 210m is applied, by using, for example, the fully automatic film applicator 500, at a predetermined thickness onto the substrate 506 such as a polyethylene terephthalate film to form the positive electrode mixture forming sheet 210s.

Thereafter, the solvent is removed from the positive electrode mixture forming sheet 210s formed on the substrate 506, and the positive electrode mixture forming sheet 210s is peeled off from the substrate 506. As shown FIG. 14, the positive electrode mixture forming sheet 210s is punched into a predetermined size using a punching die, and a molded object 210f is formed.

Thereafter, the positive electrode mixture 210 containing the solid electrolyte is obtained by subjecting the molded object 210f to a heating step at a temperature of 700°C or higher and 1,000°C or lower. The heating time and the atmosphere in the heating step are as described above.

### 5.2.2 Step S12

The method proceeds to step S12 after step S11.

In the step of forming the electrolyte layer 220 in step S12, the electrolyte layer 220 is formed on one surface 210b of the positive electrode mixture 210. More specifically, for example, a sputtering device is used to perform sputtering using LiCoO₂ as a target in an inert gas such as an argon gas, thereby forming a LiCoO₂ layer on the surface of the positive electrode mixture 210. Thereafter, the LiCoO₂ layer formed on the positive electrode mixture 210 is calcined in an oxidizing atmosphere to convert a crystal of the LiCoO₂ layer into a high temperature phase crystal, and the LiCoO₂ layer can be formed as the electrolyte layer 220. A calcination condition for the LiCoO₂ layer is not particularly limited. A heating temperature may be 400°C or higher and 600°C or lower, and a heating time may be 1 hour or longer and 3 hours or shorter.

### 5.2.3 Step S13

The method proceeds to step S13 after step S12.

In the step of forming the negative electrode 30 in step S13, the negative electrode 30 is formed at a surface side opposite to a surface where the electrolyte layer 220 faces the positive electrode mixture 210. More specifically, for example, a vacuum deposition device is used to form a thin film of metal Li at the surface side opposite to a surface where the electrolyte layer 220 faces the positive electrode mixture 210, so that the negative electrode 30 can be formed.

### 5.2.4 Step S14

The method proceeds to step S14 after step S13.

In the step of forming the current collectors 41 and 42 in step S14, the current collector 41 is formed to be in contact with the other surface of the positive electrode mixture 210, that is, a surface 210a at a side opposite to the surface 210b on which the electrolyte layer 220 is formed, and the current collector 42 is formed to be in contact with the negative electrode 30.

The method for forming the positive electrode mixture 210 and the electrolyte layer 220 is not limited to the method described above. For example, the positive electrode mixture 210 and the electrolyte layer 220 may be formed as follows. That is, first, a slurry which is a mixture of the solid composition according to the present disclosure, a binder, and a solvent is obtained. Then, the obtained slurry is charged into the fully automatic film applicator 500, and applied onto the substrate 506 to form an electrolyte forming sheet. Thereafter, the electrolyte forming sheet and the positive electrode mixture forming sheet 210s formed in the same manner as described above are pressed in a stacked state and are bonded together. Thereafter, a stacked sheet obtained by bonding can be die-cut into a molded object, and the molded object can be calcined in an oxidizing atmosphere, to obtain a stacked body including the positive electrode mixture 210 and the electrolyte layer 220.

### 5.3 Method for Producing Secondary Battery According to Third Embodiment

Next, a method for producing the secondary battery according to the third embodiment will be described.

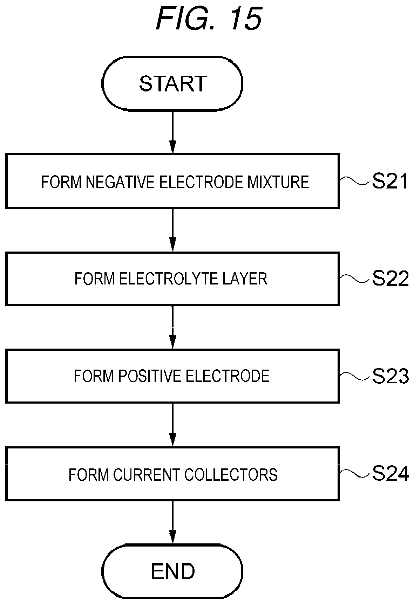

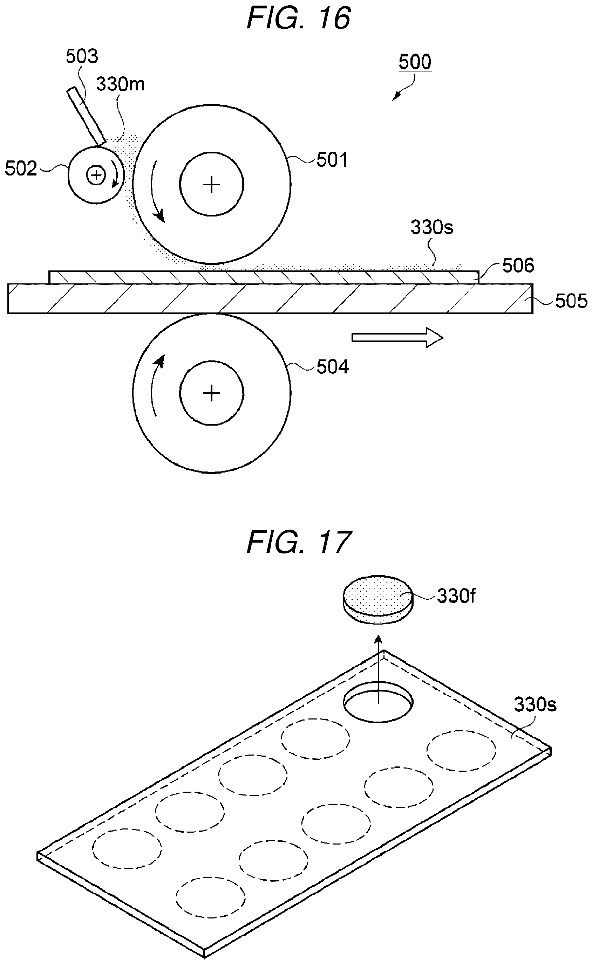

FIG. 15 is a flowchart showing a method for producing a lithium ion battery as the secondary battery according to the third embodiment. FIGS. 16 and 17 are schematic views schematically showing the method for producing the lithium ion battery as the secondary battery according to the third embodiment.

Hereinafter, the method for producing the secondary battery according to the third embodiment will be described with reference to the drawings. Differences from the embodiments described above will be mainly described, and description of the same matters will be omitted.

As shown in FIG. 15, the method for producing the lithium ion battery 100 according to the present embodiment includes step S21, step S22, step S23, and step S24.

Step S21 is a step of forming the negative electrode mixture 330. Step S22 is a step of forming the electrolyte layer 220. Step S23 is a step of forming the positive electrode 10. Step S24 is a step of forming the current collectors 41 and 42.

### 5.3.1 Step S21

In the step of forming the negative electrode mixture 330 in step S21, the negative electrode mixture 330 is formed.

For example, the negative electrode mixture 330 can be formed as follows.

That is, first, a slurry 330m which is a mixture of the negative electrode active materials 331 such as Li₄Ti₅O₁₂, the solid composition according to the present disclosure, a binder such as polypropylene carbonate, and a solvent such as 1,4-dioxane is obtained. The slurry 330m may be prepared by further using a dispersant, a diluent, a moisturizer, or the like as needed.

Next, a negative electrode mixture forming sheet 330s is formed using the slurry 330m. More specifically, as shown in FIG. 16, the slurry 330m is applied, by using, for example, the fully automatic film applicator 500, at a predetermined thickness onto the substrate 506 such as a polyethylene terephthalate film to form the negative electrode mixture forming sheet 330s.

Thereafter, the solvent is removed from the negative electrode mixture forming sheet 330s formed on the substrate 506, and the negative electrode mixture forming sheet 330s is peeled off from the substrate 506. As shown FIG. 17, the negative electrode mixture forming sheet 330s is punched into a predetermined size using a punching die, and a molded object 330f is formed.

Thereafter, the negative electrode mixture 330 containing the solid electrolyte is obtained by subjecting the molded object 330f to a heating step at a temperature of 700°C or higher and 1,000°C or lower. The heating time and the atmosphere in the heating step are as described above.

### 5.3.2 Step S22

The method proceeds to step S22 after step S21.

In the step of forming the electrolyte layer 220 in step S22, the electrolyte layer 220 is formed on one surface 330a of the negative electrode mixture 330. More specifically, for example, a sputtering device is used to perform sputtering using a solid solution Li_{2.2}C_{0.8}B_{0.2}O₃ of Li₂CO₃ and Li₃BO₃ as a target in an inert gas such as an argon gas, thereby forming a Li_{2.2}C_{0.8}B_{0.2}O₃ layer on the surface of the negative electrode mixture 330. Thereafter, the Li_{2.2}C_{0.8}B_{0.2}O₃ layer formed on the negative electrode mixture 330 is calcined in an oxidizing atmosphere to convert a crystal of the Li_{2.2}C_{0.8}B_{0.2}O₃ layer into a high temperature phase crystal, and the Li_{2.2}C_{0.8}B_{0.2}O₃ layer can be formed as the electrolyte layer 220. A calcination condition for the Li_{2.2}C_{0.8}B_{0.2}O₃ layer is not particularly limited. A heating temperature may be 400°C or higher and 600°C or lower, and a heating time may be 1 hour or longer and 3 hours or shorter.

### 5.3.3 Step S23

The method proceeds to step S23 after step S22.

In the step of forming the positive electrode 10 in step S23, the positive electrode 10 is formed at one surface 220a side of the electrolyte layer 220, that is, at a surface side opposite to a surface where the electrolyte layer 220 faces the negative electrode mixture 330. More specifically, first, a LiCoO₂ layer is formed on the surface 220a of the electrolyte layer 220 by using a vacuum deposition device or the like. Thereafter, a stacked body including the electrolyte layer 220 on which the LiCoO₂ layer is formed and the negative electrode mixture 330 is calcined to convert a crystal of the LiCoO₂ layer into a high temperature phase crystal, and the LiCoO₂ layer can be formed as the positive electrode 10. A calcination condition for the LiCoO₂ layer is not particularly limited. A heating temperature may be 400°C or higher and 600°C or lower, and a heating time may be 1 hour or longer and 3 hours or shorter.

### 5.3.4 Step S24

The method proceeds to step S24 after step S23.

In the step of forming the current collectors 41 and 42 in step S24, the current collector 41 is formed to be in contact with one surface 10a of the positive electrode 10, that is, the surface 10a at a side opposite to a surface of the positive electrode 10 where the electrolyte layer 220 is formed, and the current collector 42 is formed to be in contact with the other surface of the negative electrode mixture 330, that is, a surface 330b at a side opposite to the surface 330a of the negative electrode mixture 330 where the electrolyte layer 220 is formed.

The method for forming the negative electrode mixture 330 and the electrolyte layer 220 is not limited to the method described above. For example, the negative electrode mixture 330 and the electrolyte layer 220 may be formed as follows. That is, first, a slurry which is a mixture of the solid composition according to the present disclosure, a binder, and a solvent is obtained. Then, the obtained slurry is charged into the fully automatic film applicator 500, and applied onto the substrate 506 to form an electrolyte forming sheet. Thereafter, the electrolyte forming sheet and the negative electrode mixture forming sheet 330s formed in the same manner as described above are pressed in a stacked state and are bonded together. Thereafter, a stacked sheet obtained by bonding can be die-cut into a molded object, and the molded object is calcined in an oxidizing atmosphere, to obtain a stacked body including the negative electrode mixture 330 and the electrolyte layer 220.

### 5.4 Method for Producing Secondary Battery According to Fourth Embodiment

Next, a method for producing the secondary battery according to the fourth embodiment will be described.

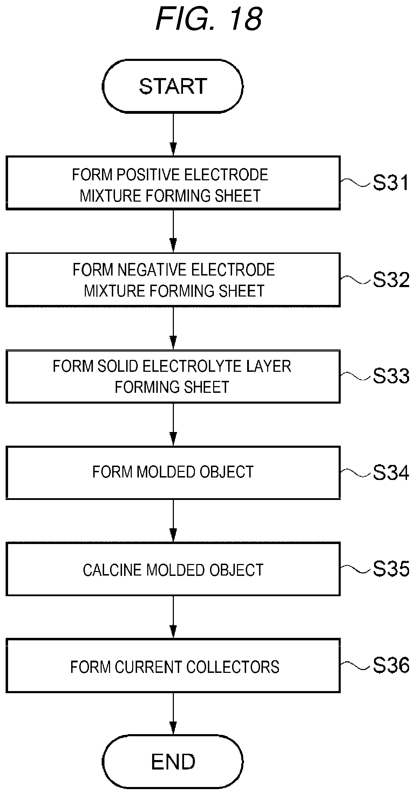

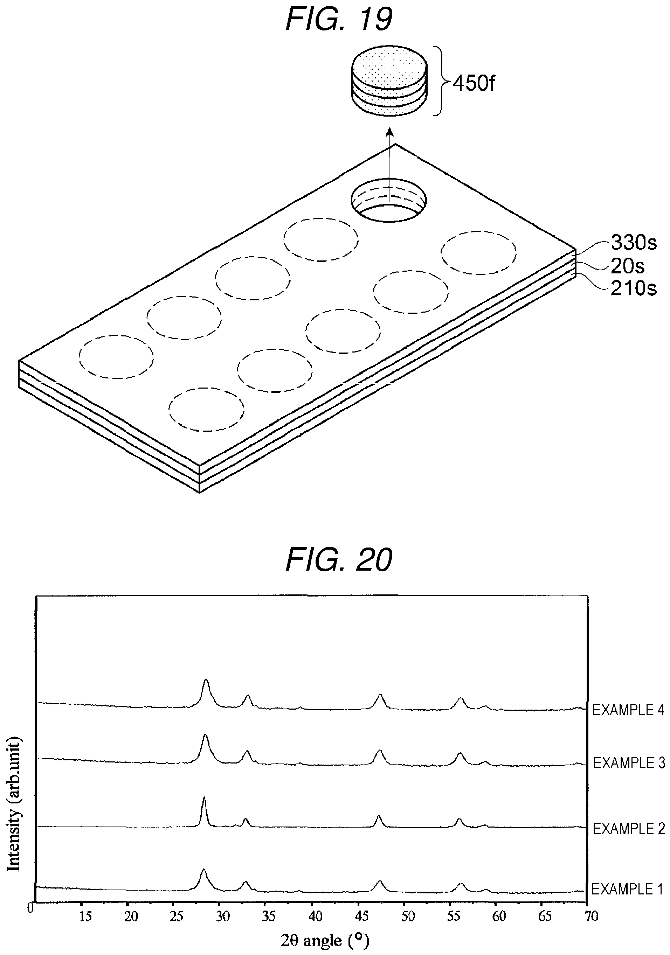

FIG. 18 is a flowchart showing a method for producing a lithium ion battery as the secondary battery according to the fourth embodiment. FIG. 19 is a schematic view schematically showing the method for producing the lithium ion battery as the secondary battery according to the fourth embodiment.

Hereinafter, the method for producing the secondary battery according to the fourth embodiment will be described with reference to the drawings. Differences from the embodiments described above will be mainly described, and description of the same matters will be omitted.

As shown in FIG. 18, the method for producing the lithium ion battery 100 according to the present embodiment includes step S31, step S32, step S33, step S34, step S35, and step S36.

Step S31 is a step of forming a positive electrode mixture 210 forming sheet. Step S32 is a step of forming a negative electrode mixture 330 forming sheet. Step S33 is a step of forming a solid electrolyte layer 20 forming sheet. Step S34 is a step of forming a molded object 450f obtained by molding a stacked body including the positive electrode mixture 210 forming sheet, the negative electrode mixture 330 forming sheet, and the solid electrolyte layer 20 forming sheet into a predetermined shape. Step S35 is a step of calcining the molded object 450f. Step S36 is a step of forming the current collectors 41 and 42.

In the following description, step S32 is performed after step S31, and step S33 is performed after step S32. The method is not limited to being performed in order of step S31, step S32, and step S33. The order may be changed, or step S31, step S32, and step S33 may be performed simultaneously.

### 5.4.1 Step S31

In the step of forming the positive electrode mixture 210 forming sheet in step S31, the positive electrode mixture forming sheet 210s which is the positive electrode mixture 210 forming sheet is formed.

The positive electrode mixture forming sheet 210s can be formed by, for example, the method same as the method described in the second embodiment.

The positive electrode mixture forming sheet 210s obtained in the present step is preferably obtained by removing the solvent from the slurry 210m used for forming the positive electrode mixture forming sheet 210s.

### 5.4.2 Step S32

The method proceeds to step S32 after step S31.

In the step of forming the negative electrode mixture 330 forming sheet in step S32, the negative electrode mixture forming sheet 330s which is the negative electrode mixture 330 forming sheet is formed.

The negative electrode mixture forming sheet 330s can be formed by, for example, the method as same the method described in the third embodiment.

The negative electrode mixture forming sheet 330s obtained in the present step is preferably obtained by removing the solvent from the slurry 330m used for forming the negative electrode mixture forming sheet 330s.

### 5.4.3 Step S33

The method proceeds to step S33 after step S32.

In the step of forming the solid electrolyte layer 20 forming sheet in step S33, the solid electrolyte forming sheet 20s which is the solid electrolyte layer 20 forming sheet is formed.

The solid electrolyte forming sheet 20s can be formed by, for example, the method same as the method described in the first embodiment.

The solid electrolyte forming sheet 20s obtained in the present step is preferably obtained by removing the solvent from the slurry 20m used for forming the solid electrolyte forming sheet 20s.

### 5.4.4 Step S34

The method proceeds to step S34 after step S33.

In the step of forming the molded object 450f in step S34, the positive electrode mixture forming sheet 210s, the solid electrolyte forming sheet 20s, and the negative electrode mixture forming sheet 330s are sequentially pressed in a stacked state and are bonded together. Thereafter, as shown in FIG. 19, a stacked sheet obtained by bonding is die-cut to obtain the molded object 450f.

### 5.4.5 Step S35

The method proceeds to step S35 after step S34.

In the step of calcining the molded object 450f in step S35, the molded object 450f is subjected to a heating step at a temperature of 700°C or higher and 1,000°C or lower. Accordingly, a portion formed of the positive electrode mixture forming sheet 210s is formed as the positive electrode mixture 210, a portion formed of the solid electrolyte forming sheet 20s is formed as the solid electrolyte layer 20, and a portion formed of the negative electrode mixture forming sheet 330s is formed as the negative electrode mixture 330. That is, a calcined body of the molded object 450f is a stacked body including the positive electrode mixture 210, the solid electrolyte layer 20, and the negative electrode mixture 330. The heating time and the atmosphere in the heating step are as described above.

### 5.4.6 Step S36

The method proceeds to step S36 after step S35.

In the step of forming the current collectors 41 and 42 in step S36, the current collector 41 is formed to be in contact with the surface 210a of the positive electrode mixture 210, and the current collector 42 is formed to be in contact with the surface 330b of the negative electrode mixture 330.

Although preferred embodiments according to the present disclosure have been described above, the present disclosure is not limited thereto.

For example, the method for producing the solid electrolyte may be applied to a method including other steps in addition to the steps described above.

When the present disclosure is applied to a secondary battery, a configuration of the secondary battery is not limited to those in the embodiments described above.

For example, when the present disclosure is applied to a secondary battery, the secondary battery is not limited to the lithium ion battery, and may be, for example, a secondary battery in which a porous separator is provided between a positive electrode mixture and a negative electrode, and the separator is impregnated in an electrolytic solution.

When the present disclosure is applied to a secondary battery, a method for producing the secondary battery is not limited to those in the embodiments described above. For example, the order of steps in production of the secondary battery may be different from those in the embodiments described above.

In the embodiments described above, although the solid electrolyte according to the present disclosure is described as one that constitutes a part of the secondary battery, particularly as one that constitutes a part of the all-solid lithium secondary battery that is an all-solid secondary battery, the solid electrolyte according to the present disclosure may constitute, for example, a part other than the all-solid secondary battery or a part other than the secondary battery.

### Examples

Next, specific examples according to the present disclosure will be described.

### 6. Production of Solid Composition

### Example 1

First, a first solution containing lanthanum nitrate hexahydrate as a lanthanum source, tetrabutoxy zirconium as a zirconium source, tributoxy antimony as an antimony source, pentaethoxy tantalum as a tantalum source, and 2-n-butoxyethanol as a solvent at a predetermined ratio was prepared, and a second solution containing lithium nitrate as a lithium compound and 2-n-butoxyethanol as a solvent at a predetermined ratio was prepared.

Next, the first solution and the second solution were mixed at a predetermined ratio, to obtain mixed liquids having compositions shown in Table 1.

Next, the mixed liquid obtained as described above was subjected to a first heat treatment at 140°C for 20 minutes in the air atmosphere under a state of being placed in a titanium beaker, to obtain a gel-like mixture.

Next, the gel-like mixture obtained as described above was subjected to a second heat treatment at 540°C for 20 minutes in the air atmosphere to obtain a solid composition as an ash-like thermal decomposition product.

The solid composition obtained as described above was a composition containing a precursor oxide having a pyrochlore type crystal phase and lithium carbonate as a lithium compound. A ratio of the content of the oxo acid compound to the content of the precursor oxide in the obtained solid composition, that is, a value of XO/XP was 0.0480, XP (mass%) being the content of the precursor oxide in the solid composition and XO (mass%) being the content of the oxo acid compound in the solid composition.

### Examples 2 to 11

Mixed liquids were prepared in the same manner as in Example 1 except that the type and the content of raw materials used for the preparation of the first solution and the second solution were changed, and the mixing ratio of the first solution and the second solution was adjusted, to obtain compositions of the mixed liquids as shown in Tables 1 to 3. Solid compositions were produced in the same manner as in Example 1 except that the corresponding mixed liquids were used.

### Comparative Example 1

First, a first solution containing tris(2,4-pentanedionato) lanthanum hydrate as a lanthanum source, a tetrabutoxy zirconium as a zirconium source, a pentaethoxy niobium as a niobium source, and propionic acid as a solvent in a predetermined ratio, and a second solution containing (2,4-pentanedionato) lithium as a lithium compound and propionic acid as a solvent in a predetermined ratio were prepared.

Next, the first solution and the second solution were mixed at a predetermined ratio to obtain a mixed liquid having a composition shown in Table 3.

Next, the mixed liquid obtained as described above was subjected to a first heat treatment at 140°C for 20 minutes in the air atmosphere under a state of being placed in a titanium beaker, to obtain a gel-like mixture.

Next, the gel-like mixture obtained as described above was subjected to a second heat treatment at 540°C for 20 minutes in the air atmosphere to obtain a solid composition as an ash-like thermal decomposition product.

The solid composition obtained as described above was a composition containing a precursor oxide having a corundum type (lanthanum oxide was the main phase) crystal phase and lithium carbonate as a lithium compound. No oxo acid compound was contained in the obtained solid composition.

### Comparative Example 2

First, a first dispersion liquid containing lanthanum oxide as a lanthanum source, zirconium oxide as a zirconium source, niobium oxide as a niobium source, and n-hexane as a dispersion medium in a predetermined ratio and a second dispersion liquid containing lithium carbonate as a lithium compound and n-hexane as a dispersion medium in a predetermined ratio were prepared.

Next, the first dispersion liquid and the second dispersion liquid were mixed at a predetermined ratio to obtain a mixed liquid having a composition shown in Table 3.

Next, the mixed liquid obtained as described above was subjected to a first heat treatment at 140°C for 20 minutes in the air atmosphere under a state of being placed in a titanium beaker, and further subjected to a second heat treatment at 540°C for 20 minutes in the air atmosphere, so as to obtain a solid composition as an ash-like thermal decomposition product.

The solid composition obtained as described above was a composition containing a precursor oxide having a corundum type (lanthanum oxide was the main phase) crystal phase and lithium carbonate as a lithium compound. No oxo acid compound was contained in the obtained solid composition.

### Comparative Example 3

A mixed liquid was prepared in the same manner as in Comparative Example 2 except that the type and the content of raw materials used for the preparation of the first dispersion liquid and the second dispersion liquid were changed, and the mixing ratio of the first dispersion liquid and the second dispersion liquid was adjusted, to obtain the composition of the mixed liquid as shown in Table 3. A solid composition was produced in the same manner as in Comparative Example 2 except that the mixed liquid was used.

A sample of the solid composition according to each of Examples was processed into a thin flake by a FIB cross section processing device Helios 600 manufactured by FEI Inc., and an element distribution and a composition were examined by various analysis methods. Based on observation with a transmission electron microscope using JEM-ARM 200F manufactured by JEOL Ltd. and a result of selected area electron diffraction, it was confirmed that the sample included a relatively large amorphous region of about several hundred nm or more and an aggregate region formed of nanocrystals of 30 nm or less. According to an energy dispersive X-ray spectroscopy and an energy loss spectroscopy using JED-2300T manufactured by JEOL Ltd., lithium, carbon, and oxygen were detected from the amorphous region, and lanthanum, zirconium, and the element M were detected from the aggregate region formed of nanocrystals in the solid composition according to each of Examples.

The composition of the mixed liquid used in preparation of the solid composition of each of Examples and Comparative Examples and conditions for producing the solid composition are collectively shown in Tables 1, 2, and 3, and conditions of the solid composition in each of Examples and Comparative Examples are collectively shown in Table 4. Table 4 showed a value of XO/XP, a value of XL/XP, and a value of XO/XL where the content of the oxo acid compound in the solid composition was XO (mass%), the content of the precursor oxide in the solid composition was XP (mass%), and the content of the lithium compound in the solid composition was XL (mass%). For all solid compositions obtained in each of Examples and Comparative Examples, a content of the solvent content was 0.1 mass% or less. When a part of solid composition in each of Examples was measured by TG-DTA at a temperature rising rate of 10°C/min, only exothermic peak in a range of 300°C or higher and 1,000°C or lower was observed. Therefore, it can be said that the solid composition in each of Examples is substantially formed of a single crystal phase.

**Table 1**

| | Composition of mixed liquid | | | | First heat treatment | Second heat treatment | | |
|---|---|---|---|---|---|---|---|---|
| | Raw material compound | | Solvent | | Heating temperature [°C] | Heating temperature [°C] | Heating time (minutes) | Atmosphere |
| | Type | Content (part by mass) | Type | Content (part by mass) | | | | |
| Example 1 | Tetrabutoxy zirconium | 5.87 | 2-n-butoxyethanol | 304 | 140 | 540 | 20 | Air atmosphere |
| | Tri-butoxyantimony | 1.71 | | | | | | |
| | Pentaethoxy tantalum | 0.81 | | | | | | |
| | Lithium nitrate | 4.34 | | | | | | |
| | Lanthanum nitrate hexahydrate | 12.99 | | | | | | |
| Example 2 | Tetrabutoxy zirconium | 7.68 | 2-n-butoxyethanol | 304 | 140 | 540 | 20 | Air atmosphere |
| | Pentaethoxy niobium | 0.80 | | | | | | |
| | Pentaethoxy tantalum | 0.20 | | | | | | |
| | Lithium nitrate | 4.62 | | | | | | |
| | Lanthanum nitrate hexahydrate | 12.99 | | | | | | |
| Example 3 | Tetrabutoxy zirconium | 6.10 | 2-n-butoxyethanol | 304 | 140 | 540 | 20 | Air atmosphere |
| | Tri-butoxyantimony | 1.36 | | | | | | |
| | Pentaethoxy niobium | 0.80 | | | | | | |
| | Lithium nitrate | 4.38 | | | | | | |
| | Lanthanum nitrate hexahydrate | 12.99 | | | | | | |
| Example 4 | Tetrabutoxy zirconium | 4.29 | 2-n-butoxyethanol | 304 | 140 | 540 | 20 | Air atmosphere |
| | Tri-butoxyantimony | 1.36 | | | | | | |
| | Pentaethoxy niobium | 0.80 | | | | | | |
| | Pentaethoxy tantalum | 1.62 | | | | | | |
| | Lithium nitrate | 4.10 | | | | | | |
| | Lanthanum nitrate hexahydrate | 12.99 | | | | | | |
| Example 5 | Tetrabutoxy zirconium | 7.90 | 2-n-butoxyethanol | 304 | 140 | 540 | 20 | Air atmosphere |
| | Pentaethoxy niobium | 0.80 | | | | | | |
| | Lithium nitrate | 4.65 | | | | | | |
| | Lanthanum nitrate hexahydrate | 12.99 | | | | | | |

**Table 2**

| | Composition of mixed liquid | | | | First heat treatment | Second heat treatment | | |
|---|---|---|---|---|---|---|---|---|
| | Raw material compound | | Solvent | | Heating temperature [°C] | Heating temperature [°C] | Heating time (minutes) | Atmosphere |
| | Type | Content (part by mass) | Type | Content (part by mass) | | | | |
| Example 6 | Tetrabutoxy zirconium | 7.90 | 2-n-butoxyethanol | 244 | 140 | 540 | 20 | Air atmosphere |
| | Tri-butoxyantimony | 0.85 | | | | | | |
| | Lithium nitrate | 4.65 | | | | | | |
| | Lanthanum nitrate hexahydrate | 12.99 | | | | | | |
| Example 7 | Tetrabutoxy zirconium | 7.90 | 2-n-butoxyethanol | 237 | 140 | 540 | 20 | Air atmosphere |
| | Pentaethoxy tantalum | 1.02 | | | | | | |
| | Lithium nitrate | 4.65 | | | | | | |
| | Lanthanum nitrate hexahydrate | 12.99 | | | | | | |
| Example 8 | Tetrabutoxy zirconium | 5.87 | 2-n-butoxyethanol | 304 | 140 | 540 | 20 | Air atmosphere |
| | Tri-butoxyantimony | 1.71 | | | | | | |
| | Pentaethoxy tantalum | 0.81 | | | | | | |
| | Lithium nitrate | 4.34 | | | | | | |
| | Lanthanum nitrate hexahydrate | 12.99 | | | | | | |
| Example 9 | Tetrabutoxy zirconium | 7.90 | 2-n-butoxyethanol | 246 | 140 | 540 | 20 | Air atmosphere |
| | Pentaethoxy niobium | 0.80 | | | | | | |
| | Lithium nitrate | 4.65 | | | | | | |
| | Lanthanum nitrate hexahydrate | 12.99 | | | | | | |
| Example 10 | Tetrabutoxy zirconium | 5.87 | 2-n-butoxyethanol | 303 | 140 | 540 | 20 | Air atmosphere |
| | Tri-butoxyantimony | 1.71 | | | | | | |
| | Pentaethoxy tantalum | 0.81 | | | | | | |
| | Tris(2,4-pentanedionato) lanthanum hydrate | 13.80 | Propionic acid | | | | | |
| | Lithium nitrate | 4.34 | | | | | | |

**Table 3**

| | Composition of mixed liquid | | | | First heat treatment | Second heat treatment | | |
|---|---|---|---|---|---|---|---|---|
| | Raw material compound | | Solvent | | Heating temperature [°C] | Heating temperature [°C] | Heating time (minutes) | Atmosphere |
| | Type | Content (part by mass) | Type | Content (part by mass) | | | | |
| Example 11 | Tetrabutoxy zirconium | 5.87 | 2-n-butoxyethanol | 298 | 140 | 540 | 20 | Air atmosphere |
| | Tri-butoxyantimony | 1.71 | | | | | | |
| | Pentaethoxy tantalum | 0.81 | | | | | | |
| | Tris(2,4-pentanedionato) lanthanum hydrate | 13.80 | Propionic acid | | | | | |
| | Lanthanum nitrate hexahydrate | 4.03 | | | | | | |
| Example 12 | Tetrabutoxy zirconium | 5.87 | 2-n-butoxyethanol | 299 | 140 | 540 | 20 | Air atmosphere |
| | Tri-butoxyantimony | 1.71 | | | | | | |
| | Pentaethoxy tantalum | 0.81 | | | | | | |
| | Tris(2,4-pentanedionato) lanthanum hydrate | 13.80 | Propionic acid | | | | | |
| | Lithium nitrate | 2.17 | | | | | | |
| | Lanthanum nitrate hexahydrate | 2.02 | | | | | | |
| Comparative Example 1 | Tetrabutoxy zirconium | 1.34 | Propionic acid | 20 | 140 | 540 | 20 | Air atmosphere |
| | Pentaethoxy niobium | 0.16 | | | | | | |
| | (2,4-pentanedionato) lithium | 1.43 | | | | | | |
| | Tris(2,4-pentanedionato) lanthanum hydrate | 2.62 | | | | | | |
| Comparative Example 2 | Zirconium oxide | 2.16 | n-hexane (as dispersion medium) | 40 | 140 | 540 | 20 | Air atmosphere |
| | Niobium oxide | 0.33 | | | | | | |
| | Lithium carbonate | 2.5 | | | | | | |
| | Lanthanum oxide | 4.89 | | | | | | |
| Comparative Example 3 | Zirconium oxide | 1.17 | n-hexane (as dispersion medium) | 40 | 140 | 540 | 20 | Air atmosphere |
| | Antimony oxide | 0.58 | | | | | | |
| | Niobium oxide | 0.33 | | | | | | |
| | Tantalum oxide | 0.88 | | | | | | |
| | Lithium carbonate | 2.2 | | | | | | |
| | Lanthanum oxide | 4.89 | | | | | | |

**Table 4**

| | Precursor oxide | | | Lithium compound | | Oxo acid compound | | XO/XP | XL/XP | XO/XL |
|---|---|---|---|---|---|---|---|---|---|---|
| | Crystal phase | Crystal particle diameter [nm] | Content XP (mass%) | Composition | Content XL (mass%) | Composition | Content XO (mass%) | | | |
| Example 1 | Pyrochlore type | 40 | 55.8 | Li₂CO₃ | 16.2 | LiNO₃ | 2.68 | 0.0480 | 0.29 | 0.16 |
| Example 2 | Pyrochlore type | 40 | 56.0 | Li₂CO₃ | 16.2 | LiNO₃ | 2.69 | 0.0480 | 0.29 | 0.16 |
| Example 3 | Pyrochlore type | 40 | 55.7 | Li₂CO₃ | 16.2 | LiNO₃ | 2.67 | 0.0480 | 0.29 | 0.16 |
| Example 4 | Pyrochlore type | 40 | 55.7 | Li₂CO₃ | 16.2 | LiNO₃ | 2.67 | 0.0480 | 0.29 | 0.16 |
| Example 5 | Pyrochlore type | 40 | 55.7 | Li₂CO₃ | 16.2 | LiNO₃ | 2.67 | 0.0480 | 0.29 | 0.16 |
| Example 6 | Pyrochlore type | 40 | 55.7 | Li₂CO₃ | 16.2 | LiNO₃ | 2.67 | 0.0480 | 0.29 | 0.16 |
| Example 7 | Pyrochlore type | 40 | 55.7 | Li₂CO₃ | 16.2 | LiNO₃ | 2.67 | 0.0480 | 0.29 | 0.16 |
| Example 8 | Pyrochlore type | 40 | 55.7 | Li₂CO₃ | 16.2 | LiNO₃ | 2.67 | 0.0480 | 0.29 | 0.16 |
| Example 9 | Pyrochlore type | 40 | 55.6 | Li₂CO₃ | 16.2 | LiNO₃ | 2.67 | 0.0480 | 0.29 | 0.16 |
| Example 10 | Pyrochlore type | 130 | 55.7 | Li₂CO₃ | 16.2 | LiNO₃ | 1.28 | 0.0230 | 0.29 | 0.16 |
| Example 11 | Pyrochlore type | 90 | 55.8 | Li₂CO₃ | 16.2 | LiNO₃ | 0.75 | 0.0135 | 0.29 | 0.14 |
| Example 12 | Pyrochlore type | 60 | 55.7 | Li₂CO₃ | 16.2 | LiNO₃ | 12.25 | 0.220 | 0.29 | 0.15 |
| Comparative Example 1 | Lithium zirconate lanthanum oxide type | 200 | 78.6 | Li₂CO₃ | 0.23 | - | 0 | 0.0000 | 0.30 | - |
| Comparative Example 2 | Lithium carbonate lanthanum oxide type | 1000 | 88.3 | Li₂CO₃ | 0.23 | - | 0 | 0.0000 | 0.30 | - |
| Comparative Example 3 | Lithium carbonate lanthanum oxide | 1000 | 84.2 | Li₂CO₃ | 0.23 | - | 0 | 0.0000 | 0.30 | - |

### 7. Production of Solid Electrolyte

A solid electrolyte was produced in the following manner using the solid composition in each of Examples and Comparative Examples.

First, 1 g sample was taken out from each solid composition.

Next, the sample was filled in a pellet die provided with an exhaust port having an inner diameter of 13 mm, manufactured by Specac Inc., and was press-molded with a weight of 6 kN to obtain pellets as a molded object. The obtained pellets were placed into an alumina crucible and sintered at 900°C for 8 hours in an air atmosphere to obtain a pellet-like solid electrolyte.

The solid composition in each of Examples and Comparative Examples and the solid electrolyte obtained as described above using the solid composition were analyzed using an X-ray diffractometer X'Pert-PRO manufactured by Koninklijke Philips N.V., and an X-ray diffraction pattern was obtained.

As a result, it was confirmed in each of Examples that the precursor oxide and the solid electrolyte contained in the solid composition were formed of different crystal phases.

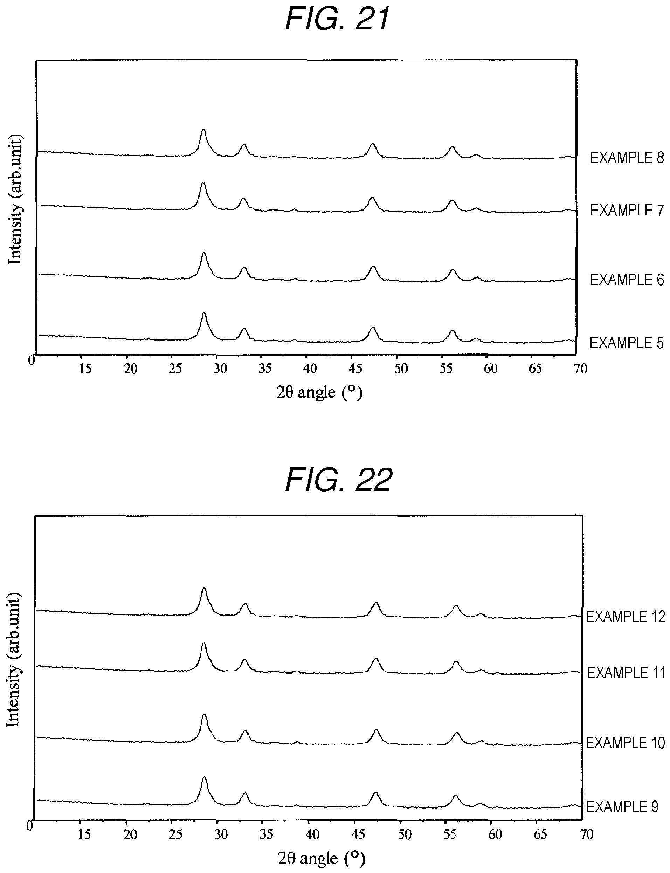

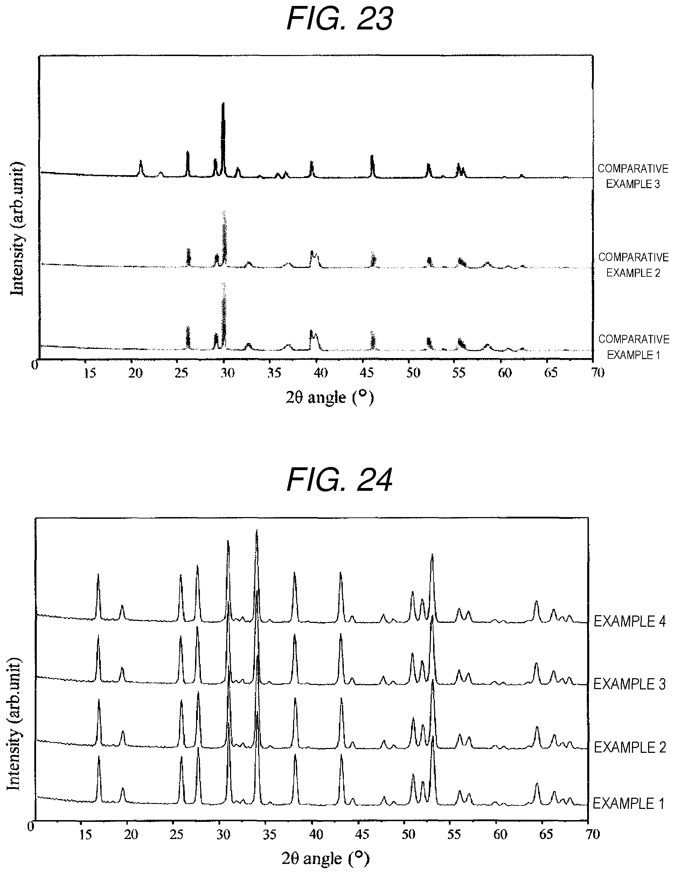

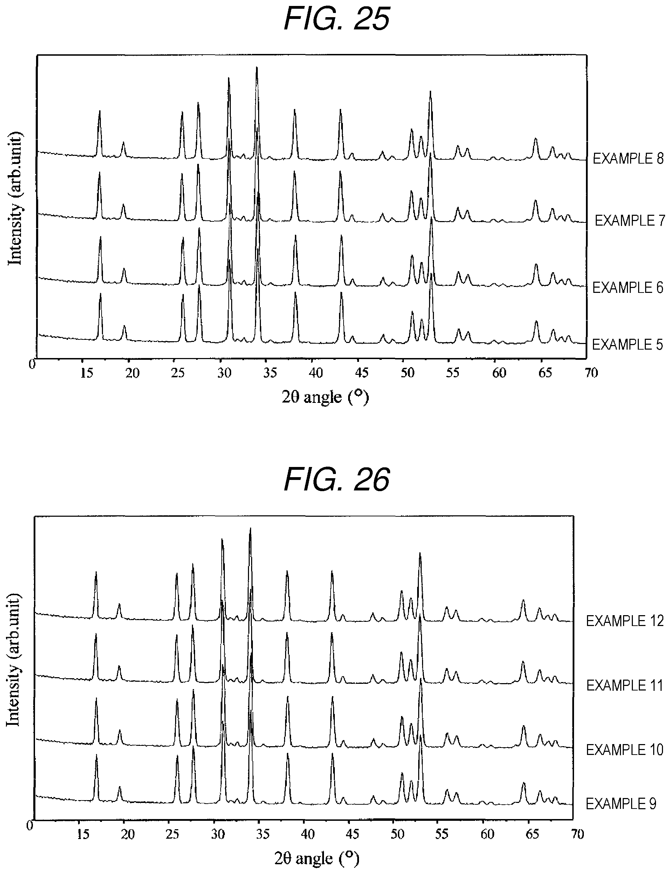

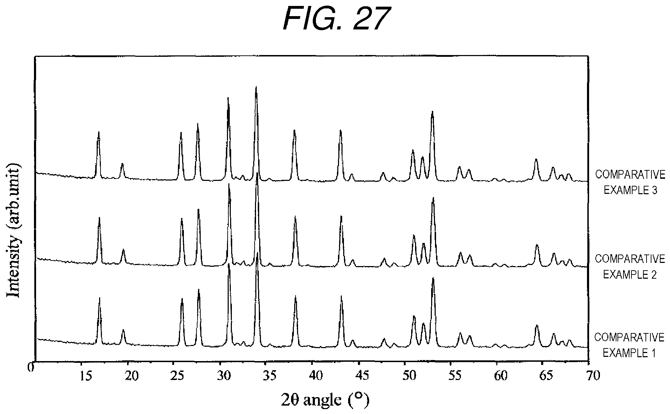

FIGS. 20 to 23 show X-ray diffraction patterns when the solid composition in each of Examples and Comparative Examples was used as the sample. FIGS. 24 to 27 show X-ray diffraction patterns when the solid electrolyte in each of the Examples and Comparative Examples was used as the sample.

As a result, it was confirmed in each of Examples that the precursor oxide contained in the solid composition was formed of a crystal phase different from the crystal phase of the solid electrolyte formed using the solid composition.

Table 5 collectively shows the composition and the crystal phase of the solid electrolyte according to each of Examples and Comparative Examples. The content of the oxo acid compound in the solid electrolyte according to each of Examples and Comparative Examples was 10 ppm or less.

**Table 5**

| | Composition | Crystal phase |
|---|---|---|
| Example 1 | Li_{6.3}La₃Zr_{1.3}Sb_{0.5}Ta_{0.2}O₁₂ | Cubic garnet type |
| Example 2 | Li_{6.7}La₃Zr_{1.7}Nb_{0.25}Ta_{0.05}0₁₂ | Cubic garnet type |
| Example 3 | Li_{6.35}La₃Zr_{1.35}Nb_{0.25}Sba_{0.4}O₁₂ | Cubic garnet type |
| Example 4 | Li_{5.95}La₃Zr_{0.95}Nb_{0.25}Sba_{0.4}Ta_{0.4}O₁₂ | Cubic garnet type |
| Example 5 | Li_{6.75}La₃Zr_{1.75}Nb_{0.25}O₁₂ | Cubic garnet type |
| Example 6 | Li_{6.75}La₃Zr_{1.75}Nb_{0.25}O₁₂ | Cubic garnet type |
| Example 7 | Li_{6.75}La₃Zr_{1.75}Nb_{0.25}O₁₂ | Cubic garnet type |
| Example 8 | Li_{6.3}La₃Zr_{1.3}Sb_{0.5}Ta_{0.2}O₁₂ | Cubic garnet type |
| Example 9 | Li_{6.75}La₃Zr_{1.75}Nb_{0.25}O₁₂ | Cubic garnet type |
| Example 10 | Li_{6.3}La₃Zr_{1.3}Sb_{0.5}Ta_{0.2}O₁₂ | Cubic garnet type |
| Example 11 | Li_{6.3}La₃Zr_{1.3}Sb_{0.5}Ta_{0.2}O₁₂ | Cubic garnet type |
| Example 12 | Li_{6.3}La₃Zr_{1.3}Sb_{0.5}Ta_{0.2}O₁₂ | Cubic garnet type |
| Comparative Example 1 | Li_{6.75}La₃Zr_{1.75}Nb_{0.25}O₁₂ | Cubic garnet type |
| Comparative Example 2 | Li_{6.75}La₃Zr_{1.75}Nb_{0.25}O₁₂ | Cubic garnet type |
| Comparative Example 3 | Li_{5.95}La₃Zr_{0.95}Nb_{0.25}Sba_{0.4}Ta_{0.4}O₁₂ | Cubic garnet type |

### 8. Evaluation

The pellet-like solid electrolyte according to each of Examples and Comparative Examples obtained as described above was evaluated as follows.

### 8.1 Ionic Conductivity

Two sides of the pellet-like solid electrolyte obtained in 7 according to each of Examples and Comparative Examples were attached with a lithium metal foil (manufactured by Honjo Chemical Corporation) having a diameter of 8 mm to form activation electrodes, and an alternating current impedance was measured using an alternating current impedance analyzer Solatron 1260 (manufactured by Solatron Analytical) to obtain a lithium ionic conductivity. The measurement was performed at an alternating current amplitude of 10 mV in a frequency range of 10⁷ Hz to 10⁻¹ Hz. The lithium ionic conductivity obtained by the measurement shows a total lithium ionic conductivity including a bulk lithium ionic conductivity of the solid electrolyte and a lithium ionic conductivity at a grain boundary.

The results are collectively shown in Table 6.

**Table 6**

| | Ionic conductivity (S/cm) |
|---|---|
| Example 1 | 8.8 x 10⁻⁴ |
| Example 2 | 6.1 x 10⁻⁴ |
| Example 3 | 3.8 x 10⁻⁴ |
| Example 4 | 4.8 x 10⁻⁴ |
| Example 5 | 8.4 x 10⁻⁵ |
| Example 6 | 1.3 x 10⁻⁴ |
| Example 7 | 5.5 x 10⁻⁵ |
| Example 8 | 9.4 x 10⁻⁴ |
| Example 9 | 8.9 x 10⁻⁴ |
| Example 10 | 1.8 x 10⁻⁴ |
| Example 11 | 9.5 x 10⁻⁵ |
| Example 12 | 2.1 x 10⁻⁴ |
| Comparative Example 1 | 1.3 x 10⁻⁵ |
| Comparative Example 2 | 2.1 x 10⁻⁷ |
| Comparative Example 3 | 3.7 x 10⁻⁶ |

As is clear from table 6, excellent results were obtained in the present disclosure. In contrast, satisfactory results were not obtained in the Comparative Examples.

## Claims

1. A solid composition for use in forming a solid electrolyte having a crystal phase, the solid composition comprising:
at normal temperature and normal pressure,
an oxide having a crystal phase different from the crystal phase of the solid electrolyte;
a lithium compound; and
an oxo acid compound.

2. The solid composition according to claim 1, wherein
the oxo acid compound contains at least one of a nitrate ion and a sulfate ion as an oxo anion.

3. The solid composition according to claim 1, wherein
the solid composition contains Li, La, Zr, and M, and
a ratio of substance amounts of Li, La, Zr, and M contained in the solid composition is 7-x:3:2-x:x, and 0 < x < 2.0, where M is at least one element selected from the group consisting of Nb, Ta, and Sb.

4. The solid composition according to claim 1, wherein
the crystal phase of the oxide is a pyrochlore type crystal, and
the crystal phase of the solid electrolyte is a cubic garnet type crystal.

5. A method for producing a solid electrolyte, comprising:
heating the solid composition according to claim 1 at a temperature of 700°C or higher and 1,000°C or lower.
